# EUROPEAN PATENT APPLICATION

(11) **EP 4 668 889 A1**
(43) Date of publication of application: **24.12.2025**
(21) Application number: 24756182.2
(22) Date of filing: 07.02.2024
(51) Int. Cl.: H04W 52/02

(54) **TRANSMISSION PROCESSING METHOD AND APPARATUS, TERMINAL AND NETWORK SIDE DEVICE**

(30) Priority: 15.02.2023 CN 202310119269
(71) Applicant: Vivo Mobile Communication Co., Ltd., Dongguan, Guangdong 523863 (CN)
(72) Inventor: LI, Jianhui, Dongguan, Guangdong 523863 (CN); PAN, Xueming, Dongguan, Guangdong 523863 (CN); YANG, Xiaodong, Dongguan, Guangdong 523863 (CN)
(74) Representative: Conti, Marco
(86) International application number: PCT/CN2024/076500
(87) International publication number: WO 2024/169809

(57) **Abstract**

The present application discloses a transmission processing method, apparatus, terminal, and network-side device, pertaining to the field of communication technology. The transmission processing method of an embodiment of the present application includes: determining, by a terminal based on target configuration information, configuration information to be used by a target cell, and determining, based on the configuration information to be used by the target cell, at least one of a first discontinuous transmission pattern and a first discontinuous transmission active time of the target cell; where the target configuration information includes any one of the following: first configuration information; second configuration information; the first configuration information and third configuration information; the second configuration information and the third configuration information; fourth configuration information; and the fourth configuration information and the third configuration information. The fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

## Description

### CROSS-REFERENCE TO RELATED APPLICATIONS

The present application claims priority to Chinese Patent Application No. 202310119269.0, filed on February 15, 2023, which is incorporated herein by reference in its entirety.

### TECHNICAL FIELD

The present application pertains to the field of communication technologies, and specifically relates to a transmission processing method, a transmission processing apparatus, a terminal, and a network-side device.

### BACKGROUND

With the development of communication technology, a discontinuous reception mechanism has been introduced for terminals, enabling the terminal to implement energy saving. For example, a network-side device can configure terminal discontinuous reception configuration information for a terminal, and the terminal enters an energy-saving mode based on this configuration information. Currently, there is consideration for introducing a discontinuous transmission mechanism at the cell level to enable energy saving for base stations, which would involve related configuration information for cells. Determining the configuration information used for cell discontinuous transmission has become an urgent issue to be addressed.

### SUMMARY

Embodiments of the present application provide a transmission processing method, a transmission processing apparatus, a terminal, and a network-side device, so as to address the issue of determining the configuration information to be used for cell discontinuous transmission.

According to a first aspect, a transmission processing method is provided, executed by a terminal, the method including:
determining, by the terminal based on target configuration information, configuration information to be used by a target cell, where the target configuration information includes any one of the following: first configuration information; second configuration information; the first configuration information and third configuration information; the second configuration information and the third configuration information; fourth configuration information; and the fourth configuration information and the third configuration information;
determining, by the terminal based on the configuration information to be used by the target cell, at least one of a first discontinuous transmission pattern and a first discontinuous transmission active time of the target cell; where
the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

According to a second aspect, a transmission processing method is provided, executed by a network-side device, the method including:
sending, by the network-side device to a terminal, target configuration information, where the target configuration information is used to determine configuration information to be used by a target cell, and the target configuration information includes any one of the following: first configuration information; second configuration information; the first configuration information and third configuration information; the second configuration information and the third configuration information; fourth configuration information; and the fourth configuration information and the third configuration information; where
the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

According to a third aspect, a transmission processing apparatus is provided, including:
a determining module configured to determine, based on target configuration information, configuration information to be used by a target cell, and determine, based on the configuration information to be used by the target cell, at least one of a first discontinuous transmission pattern and a first discontinuous transmission active time of the target cell; where the target configuration information includes any one of the following: first configuration information; second configuration information; the first configuration information and third configuration information; the second configuration information and the third configuration information; fourth configuration information; and the fourth configuration information and the third configuration information; where
the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

According to a fourth aspect, a transmission processing apparatus is provided, including:
a sending module configured to send target configuration information to a terminal, where the target configuration information is used to determine configuration information to be used by a target cell, and the target configuration information includes any one of the following: first configuration information; second configuration information; the first configuration information and third configuration information; the second configuration information and the third configuration information; fourth configuration information; and the fourth configuration information and the third configuration information; where
the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

According to a fifth aspect, a terminal is provided, the terminal including a processor and a memory, where the memory stores a program or an instruction executable on the processor, and when the program or instruction is executed by the processor, the steps of the method according to the first aspect are implemented.

According to a sixth aspect, a terminal is provided, including a processor and a communication interface, where the processor is configured to determine, based on target configuration information, configuration information to be used by a target cell, and determine, based on the configuration information to be used by the target cell, at least one of a first discontinuous transmission pattern and a first discontinuous transmission active time of the target cell; where the target configuration information includes any one of the following: first configuration information; second configuration information; the first configuration information and third configuration information; the second configuration information and the third configuration information; fourth configuration information; and the fourth configuration information and the third configuration information; where the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

According to a seventh aspect, a network-side device is provided, the network-side device including a processor and a memory, where the memory stores a program or an instruction executable on the processor, and when the program or instruction is executed by the processor, the steps of the method according to the second aspect are implemented.

According to an eighth aspect, a network-side device is provided, including a processor and a communication interface, where the communication interface is configured to send target configuration information to a terminal, where the target configuration information is used to determine configuration information to be used by a target cell, and the target configuration information includes any one of the following: first configuration information; second configuration information; the first configuration information and third configuration information; the second configuration information and the third configuration information; fourth configuration information; and the fourth configuration information and the third configuration information; where the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

According to a ninth aspect, a communication system is provided, including: a terminal and a network-side device, where the terminal is configured to execute the steps of the transmission processing method according to the first aspect, and the network-side device is configured to execute the steps of the transmission processing method according to the second aspect.

According to a tenth aspect, a readable storage medium is provided, where the readable storage medium stores a program or an instruction, and when the program or instruction is executed by a processor, the steps of the method according to the first aspect or the steps of the method according to the second aspect are implemented.

According to an eleventh aspect, a chip is provided, the chip including a processor and a communication interface, where the communication interface is coupled to the processor, and the processor is configured to run a program or an instruction to implement the steps of the method according to the first aspect or the steps of the method according to the second aspect.

According to a twelfth aspect, a computer program/program product is provided, where the computer program/program product is stored in a storage medium, and the computer program/program product is executed by at least one processor to implement the steps of the method according to the first aspect or the steps of the method according to the second aspect.

In embodiments of the present application, the terminal determines, based on target configuration information, configuration information to be used by a target cell, where the target configuration information includes any one of the following: first configuration information; second configuration information; the first configuration information and third configuration information; the second configuration information and the third configuration information; fourth configuration information; and the fourth configuration information and the third configuration information. The terminal determines, based on the configuration information to be used by the target cell, at least one of a first discontinuous transmission pattern and a first discontinuous transmission active time of the target cell; where the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information. This approach clarifies the definition of configuration information used for cell discontinuous transmission, thereby enabling the introduction of a cell discontinuous transmission mechanism to achieve energy saving for the cell.

### BRIEF DESCRIPTION OF DRAWINGS

FIG. 1 is a schematic diagram of a network structure to which embodiments of the present application are applicable;
FIG. 2 is a flowchart of a transmission processing method according to an embodiment of the present application;
FIG. 3A is a first example diagram for determining a discontinuous transmission active time in a transmission processing method according to an embodiment of the present application;
FIG. 3B is a second example diagram for determining a discontinuous transmission active time in a transmission processing method according to an embodiment of the present application;
FIG. 3C is a third example diagram for determining a discontinuous transmission active time in a transmission processing method according to an embodiment of the present application;
FIG. 4 is a schematic flowchart of another transmission processing method according to an embodiment of the present application;
FIG. 5 is a schematic structural diagram of a transmission processing apparatus according to an embodiment of the present application;
FIG. 6 is a schematic structural diagram of another transmission processing apparatus according to an embodiment of the present application;
FIG. 7 is a schematic structural diagram of a communication device according to an embodiment of the present application;
FIG. 8 is a schematic structural diagram of a terminal according to an embodiment of the present application; and
FIG. 9 is a schematic structural diagram of a network-side device according to an embodiment of the present application.

### DETAILED DESCRIPTION

The technical solutions in the embodiments of the present application will be clearly described below with reference to the drawings in the embodiments of the present application. Obviously, the described embodiments are some, but not all, embodiments of the present application. All other embodiments obtained by a person of ordinary skill in the art based on the embodiments of the present application fall within the protection scope of the present application.

The terms "first," "second," and the like in the present application are used to distinguish similar objects and are not used to describe a specific order or sequence. It should be understood that the terms used in this way are interchangeable under appropriate circumstances, so that the embodiments of the present application can be implemented in an order other than those illustrated or described herein, and the objects distinguished by "first" and "second" are generally of the same type without limiting the number of objects, for example, the first object can be one or more. In addition, "or" in the present application indicates at least one of the connected objects. For example, "A or B" covers three scenarios: Scenario 1: including A but not B; Scenario 2: including B but not A; Scenario 3: including both A and B. The character "/" generally indicates that the associated objects are in an "or" relationship.

The term "indicate" in the present application can be either a direct indication (or explicit indication) or an indirect indication (or implicit indication). A direct indication can be understood as the sender explicitly informing the receiver of specific information, operations to be performed, or requested results in the sent indication. An indirect indication can be understood as the receiver determining corresponding information based on the indication sent by the sender, or making a judgment and determining operations to be performed or requested results based on the judgment result.

It is worth noting that the technologies described in the embodiments of the present application are not limited to long term evolution (Long Term Evolution, LTE)/LTE-Advanced (LTE-Advanced, LTE-A) systems but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of the present application are often used interchangeably, and the described technologies can be used for the systems and radio technologies mentioned above as well as other systems and radio technologies. In the following descriptions, a new radio (New Radio, NR) system is described for an illustration purpose, and NR terms are used in most of the following descriptions, although these technologies may also be applied to other systems than an NR system application, for example, the 6th generation (6th Generation, 6G) communication system.

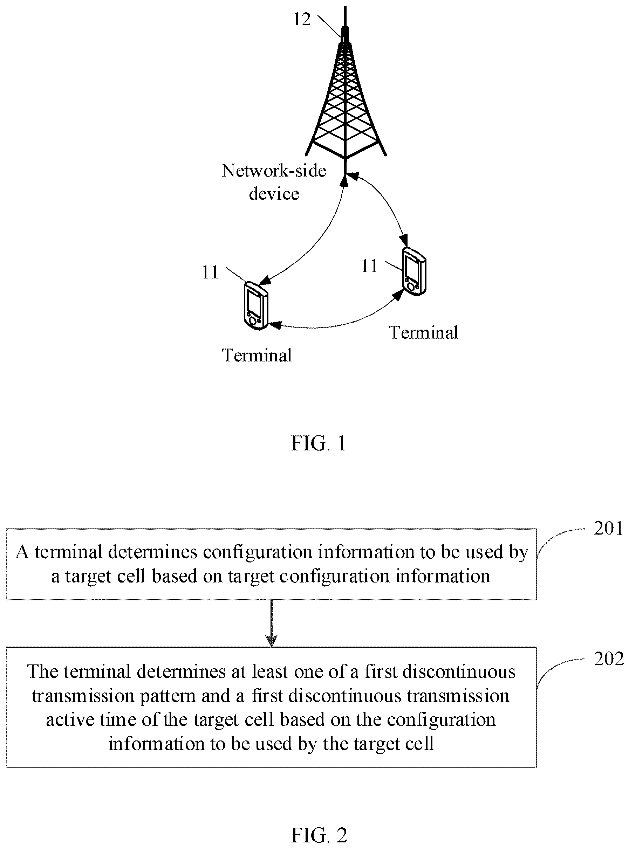

FIG. 1 shows a block diagram of a wireless communication system to which embodiments of the present application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile personal computer, UMPC), a mobile Internet device (Mobile Internet Device, MID), an augmented reality (Augmented Reality, AR), virtual reality (Virtual Reality, VR) device, a robot, a wearable device (Wearable Device), a flight vehicle (fight vehicle), vehicle user equipment (Vehicle User Equipment, VUE), shipboard equipment, pedestrian user equipment (Pedestrian User Equipment, PUE), a smart appliance (a household device with a wireless communication function, for example, a refrigerator, a television, a washing machine, or furniture), a game console, a personal computer (Personal Computer, PC), a teller machine, or a self-service machine. The wearable devices include a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. The vehicle user equipment may also be referred to as a vehicle-mounted terminal, vehicle-mounted controller, vehicle-mounted module, vehicle-mounted component, vehicle-mounted chip, or vehicle-mounted unit. It should be noted that the terminal 11 is not limited to any specific type in the embodiments of the present application. The network-side device 12 may include access network equipment or core network equipment, where the access network equipment may also be referred to as radio access network (Radio Access Network, RAN) equipment, radio access network function, or radio access network unit. The access network equipment may include a base station, a wireless local area network (Wireless Local Area Network, WLAN) access point (Access Point, AP), or a wireless fidelity (Wireless Fidelity, WiFi) node. The base station can be referred to as Node B (Node B, NB), evolved Node B (Evolved Node B, eNB), next generation Node B (next generation Node B, gNB), New Radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or other suitable terms in the field, as long as the same technical effect is achieved. The base station is not limited to any specific technical term. It should be noted that in the embodiments of the present application, only the base station in the NR system is used as an example for description, and the specific type of base station is not limited.

For ease of understanding, the following describes some content related to the embodiments of the present application.

### 1. Discontinuous reception (Discontinuous Reception, DRX) of the terminal in a radio resource control (Radio Resource Control, RRC) connected (CONNECTED) state

The basic mechanism of DRX is to configure a DRX cycle (cycle) for UE in the RRC_CONNECTED state. A DRX cycle consists of an "on duration (On Duration)" and an "opportunity for DRX (Opportunity for DRX)": during the "On Duration" period (configured by the DRX on-duration timer (drx-onDurationTimer)), the UE monitors the physical downlink control channel (Physical Downlink Control Channel, PDCCH), and the terminal is in an active period; during the "Opportunity for DRX" period, the UE does not monitor the PDCCH to reduce power consumption, and the terminal is in the sleep period.

In addition, in a case that the network-side device has configured the inactivity timer (inactivity timer), if a new transmission PDCCH is received during the onduration, the inactivity timer is started or restarted to extend the duration during which the UE monitors the PDCCH.

The DRX mechanism reduces power consumption by shortening the time during which the terminal monitors the PDCCH. However, when traffic arrives at the base station while the terminal is in the sleep period, the data packet transmission time is increased due to the inability to schedule PDCCH in a timely manner, reducing system transmission capacity.

The DRX configuration includes a long DRX cycle and further optionally, may include a short DRX cycle (Short DRX Cycle). If a short DRX cycle is configured, the UE starts or restarts the DRX short cycle timer (drx-ShortCycleTimer) upon expiration of the drx-InactivityTimer or upon receiving a DRX command (Command) media access control control element (Media Access Control Control Element, MAC CE) carried in downlink control information (Downlink Control Information, DCI) scrambled with a cell radio network temporary identifier (Cell Radio Network Temporary Identifier, C-RNTI). During the operation of the drx-ShortCycleTimer, the UE follows the short DRX cycle. When the drx-ShortCycleTimer expires, the UE switches to operate using the long DRX cycle (Long DRX Cycle). If the UE receives a Long DRX Command MAC CE, it directly switches to operate using the long DRX cycle.

Parameters of the DRX configuration information element are as follows:
drx-onDurationTimer: indicating a duration to remain in DRX on state at the beginning of a DRX cycle;
DRX slot offset (drx-SlotOffset): the delay before starting drx-onDurationTimer;
drx-InactivityTimer: indicating a duration to remain in DRX on state after a PDCCH indicating a new uplink (Uplink, UL)/downlink (Downlink, DL)/sidelink (Sidelink, SL) transmission;
downlink DRX HARQ round-trip time timer (drx-HARQ-RTT-TimerDL): indicating the minimum duration expected by a MAC entity before receiving a downlink scheduling for hybrid automatic repeat request (Hybrid Automatic Repeat Request, HARQ) retransmission, operating for each DL HARQ process except the broadcast processes;
uplink DRX HARQ round-trip time timer (drx-HARQ-RTT-TimerUL): indicating the minimum duration expected by the MAC entity before receiving a grant (grant) for uplink HARQ retransmission, applicable to each UL HARQ process;
downlink DRX retransmission timer (drx-RetransmissionTimerDL): indicating the maximum duration until a downlink retransmission is received (after drx-HARQ-RTT-TimerDL expires), applicable to each DL HARQ process except the broadcast processes;
uplink DRX retransmission timer (drx-RetransmissionTimerUL): indicating the maximum duration until a grant for scheduling uplink retransmission is received (after drx-HARQ-RTT-TimerUL expires), applicable to each UL HARQ process;
DRX long cycle start offset (drx-LongCycleStartOffset): indicating the long DRX cycle and defining the DRX start offset (drx-StartOffset) for the start subframe of long and short DRX cycles;
drx-ShortCycle: representing the short DRX cycle; and
drx-ShortCycleTimer: representing the duration during which the UE follows the short DRX cycle; where
the drx-ShortCycle and drx-ShortCycleTimer are optional parameters within the information element.

Optionally, in subsequent releases, SL configuration parameters are additionally introduced in the DRX configuration:
Sidelink DRX hybrid automatic repeat request round-trip time timer (drx-HARQ-RTT-TimerSL): indicating the minimum duration expected by the MAC entity before a grant for SL retransmission is received, applicable to each SL HARQ process;
Sidelink retransmission timer (drx-RetransmissionTimerSL): indicating the maximum duration until a grant for SL retransmission is received (after drx-HARQ-RTT-TimerSL expires), applicable to each SL HARQ process.

Optionally, if DRX is configured, the active time of serving cells in a DRX group (group) includes:
a time during which drx-onDurationTimer or drx-InactivityTimer configured in the DRX group is running;
a time during which drx-RetransmissionTimerDL, drx-RetransmissionTimerUL, or drx-RetransmissionTimerSL is running on any serving cell in the DRX group;
a time during which the random access contention resolution timer (ra-ContentionResolutionTimer) or the message B response window (msgB-ResponseWindow) is running;
a time during which a scheduling request (Scheduling Request, SR) is in a pending (pending) state after being sent on PUCCH; and
a period during which the UE awaits a first PDCCH indicating new transmission after receiving a contention-free random access (Contention-Free Random access, CFRA) random access response (Random access Response, RAR).

### 2. Cell discontinuous transmission

Cell discontinuous transmission includes at least one of cell discontinuous reception (Cell Discontinuous Reception, Cell DRX) and cell discontinuous transmission (Cell Discontinuous Transmission, Cell DTX). The primary energy-saving concept of cell discontinuous transmission is to align the DRX active periods (on duration) of different UEs, which are originally staggered in the time domain, to achieve cell discontinuous transmission, or to directly set the cell discontinuous transmission active duration. This allows the cell to turn off part or all of the signal transmission and reception of the base station or certain base station components during the cell discontinuous transmission off period (off duration) to achieve energy saving. There are two potential implementations for cell discontinuous transmission: one is explicit configuration of cell discontinuous transmission, considering coordination with UE DRX; the other is DRX reconfiguration by the base station for different UEs to align them in the time domain.

If explicitly configured, cell discontinuous transmission includes at least the parameters: cycle (periodicity), start slot (start slot)/offset (offset), and on duration. Cell discontinuous transmission may be activated via dynamic layer 1 (L1)/layer 2 (L2) signaling or RRC signaling.

Cell DTX configuration and cell DRX configuration can be configured together or independently.

### 3. Scheduling request (Scheduling Request, SR)

The UE uses the SR to request uplink shared channel (UL Shared Channel, UL-SCH) resources for new transmissions from the network-side device.

When the UE needs to transmit an SR, if the SR transmission count has not reached the maximum, the UE instructs the physical layer to indicate the SR on a physical uplink control channel (Physical Uplink Control Channel, PUCCH) resource to the network-side device and starts the SR prohibit timer (SR-prohibitTimer) unless a listen before talk (Listen Before Talk, LBT) failure indication is received from the lower layer. While the SR-prohibitTimer is running, the UE cannot send a new SR for the SR configuration corresponding to the SR-prohibitTimer.

For a pending SR not triggered by a BSR procedure in a serving cell, the UE can cancel the pending SR and stop the corresponding SR-prohibitTimer after a MAC CE related to BFR (Beam Failure Recovery), consistent LBT failure recovery (consistent LBT failure recovery) or the like is transmitted to a network-side device, or after the related event is canceled.

### 4. Random access response (Random access Response, RAR) reception (reception)

For a 4-step random access channel (Random access Channel, RACH), after the UE sends a random access preamble (preamble), the MAC entity monitors the PDCCH indicating the RAR during the running of the random access response window (ra-responseWindow) timer. If the ra-responseWindow timer expires and the UE has not received a BFR PDCCH or an RAR matching the sent preamble, the UE considers the RAR reception unsuccessful. If the number of unsuccessful RAR receptions reaches preambleTransMax + 1, the random access procedure is considered unsuccessful, and a random backoff is performed. If the criteria for selecting CFRA resources are met during the random backoff period, the UE performs the random access resource selection procedure; otherwise, the UE performs the random access resource selection procedure after the random backoff period.

For a 2-step RACH, a timer referred to as the MsgB-responseWindow functions in a manner similar to the ra-responseWindow.

### 5. Contention resolution (Contention Resolution)

After sending Msg3, the UE starts the random access contention resolution timer (ra-ContentionResolutionTimer) and monitors Msg4 while the timer is running.

The following describes in detail a transmission processing method provided in the embodiments of the present application through some embodiments and application scenarios thereof with reference to the accompanying drawings.

Referring to FIG. 2, an embodiment of the present application provides a transmission processing method. As shown in FIG. 2, the transmission processing method includes:
Step 201: determining, by a terminal based on target configuration information, configuration information to be used by a target cell, where the target configuration information includes any one of the following: first configuration information; second configuration information; the first configuration information and third configuration information; the second configuration information and the third configuration information; fourth configuration information; and the fourth configuration information and the third configuration information;
Step 202: determining, by the terminal based on the configuration information to be used by the target cell, at least one of a first discontinuous transmission pattern and a first discontinuous transmission active time of the target cell; where
the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

In this embodiment of the present application, after determining the configuration information to be used by the target cell, the terminal may perform discontinuous transmission on the target cell according to the configuration information used by the target cell. This enables the implementation of a discontinuous transmission mechanism in the target cell, thereby achieving energy saving for the cell.

It should be understood that, in the embodiments of the present application, discontinuous transmission can be understood to include at least one of discontinuous transmission and discontinuous reception. For example, the cell discontinuous transmission pattern includes a cell discontinuous reception pattern (cell DRX pattern) and a cell discontinuous transmission pattern (cell DTX pattern). In the embodiments of the present application, discontinuous transmission can be expressed as "cell DTX/DRX" or "UE DRX."

Optionally, the cell discontinuous transmission pattern can be understood as or replaced with a cell discontinuous transmission mode, used to indicate at least one of the following information: a cell discontinuous transmission cycle or a position of the cell discontinuous transmission active time.

Optionally, the transmission performed by the terminal can be understood to include at least one of sending behavior or reception behavior performed by the terminal.

Optionally, the terminal discontinuous transmission pattern is used to indicate at least one of the following information: a terminal discontinuous transmission cycle or a position of the terminal discontinuous transmission active time.

Optionally, the first discontinuous transmission pattern can be understood as a cell discontinuous transmission pattern or a terminal discontinuous transmission pattern, and the first discontinuous transmission active time can be understood as a cell discontinuous active time or a terminal discontinuous active time. In the embodiments of the present application, the first discontinuous transmission active time is used to indicate the time during which the cell or terminal can transmit or receive data in a discontinuous transmission active state.

Optionally, in a case that the target configuration information is the fourth configuration information, the terminal can first determine the fourth configuration information based on the first configuration information and the second configuration information, where parameters included in the fourth configuration information can include at least one of the following: on-duration timer; start offset; slot offset; cycle; short cycle; short cycle timer; inactivity timer; downlink hybrid automatic repeat request round-trip time timer; uplink hybrid automatic repeat request round-trip time timer; sidelink hybrid automatic repeat request round-trip time timer; uplink retransmission timer; downlink retransmission timer; or sidelink retransmission timer.

Optionally, the first configuration information includes at least one of the following parameters: on-duration timer (onDurationTimer); start offset (StartOffset); slot offset (SlotOffset); cycle (Cycle/Periodicity); short cycle (ShortCycle); or short cycle timer (ShortCycleTimer).

The onDurationTimer indicates a duration during which the on duration is maintained at the beginning of a cycle; StartOffset represents an offset of the starting subframe of a cycle, SlotOffset represents an offset value relative to a starting subframe determined by StartOffset; and ShortCycleTimer represents a duration during which the UE follows the short cycle.

Optionally, when the network-side device jointly configures cell DTX and cell DRX for the terminal, each first configuration information indicates both the cell DTX pattern and the cell DRX pattern; when the network-side device independently configures cell DTX and cell DRX for the UE, the first configuration information can be configured separately for cell DTX and cell DRX. Taking the joint configuration of cell DTX and cell DRX by a network-side device for the UE as an example, the first configuration information includes at least one of the following parameters:
cellDTX-DRX-onDurationTimer: representing a duration during which the cell discontinuous transmission is maintained on at the beginning of a cell discontinuous transmission cycle;
cellDTX-DRX-StartOffset: defining a StartOffset of a starting subframe of a cell discontinuous transmission cycle;
cellDTX-DRX-SlotOffset: representing an offset value relative to a starting subframe determined by StartOffset;
cellDTX-DRX-Cycle/Periodicity: representing a cell discontinuous transmission cycle;
cellDTX-DRX-ShortCycle: representing the short cycle of cell discontinuous transmission; or
cellDTX-DRX-ShortCycleTimer: representing a duration during which the UE follows the short cycle of cell discontinuous transmission.

Optionally, the second configuration information includes at least one of the following parameters:
on-duration timer; start offset; slot offset; cycle; short cycle; short cycle timer; inactivity timer; downlink hybrid automatic repeat request round-trip time timer; uplink hybrid automatic repeat request round-trip time timer; sidelink hybrid automatic repeat request round-trip time timer; uplink retransmission timer; downlink retransmission timer; or sidelink retransmission timer.

Optionally, when the second configuration information includes the short cycle, the cycle is the long cycle corresponding to the short cycle. In other words, the cycle parameter in the second configuration information may include only the cycle or both the long cycle and the short cycle. The short cycle and long cycle can be understood as two discontinuous transmission cycles with different values, where the short cycle has a shorter cycle value than the long cycle.

Optionally, taking the second configuration information as an example of the discontinuous reception information used by the UE when cell DTX/DRX is active, the second configuration information includes at least one of the following parameters: drx-onDurationTimer, drx-SlotOffset, drx-LongCycleStartOffset (this parameter includes both drx-LongCycle and drx-StartOffset information), drx-ShortCycle, drx-ShortCycleTimer, drx-InactivityTimer, drx-HARQ-RTT-TimerDL, drx-HARQ-RTT-TimerUL, drx-HARQ-RTT-TimerSL, drx-RetransmissionTimerDL, drx-RetransmissionTimerUL, or drx-RetransmissionTimerSL.

It should be understood that the parameters in the second configuration information may be mandatory configuration parameters or optional configuration parameters.

Optionally, the third configuration information may refer to the parameters within the DRX configuration information element described above and is not repeated here.

In the embodiments of the present application, the terminal determines, based on target configuration information, configuration information to be used by a target cell, where the target configuration information includes any one of the following: first configuration information; second configuration information; the first configuration information and third configuration information; the second configuration information and the third configuration information; fourth configuration information; and the fourth configuration information and the third configuration information. The terminal determines, based on the configuration information to be used by the target cell, at least one of a first discontinuous transmission pattern and a first discontinuous transmission active time of the target cell; where the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information. This approach clarifies the definition of configuration information used for cell discontinuous transmission, thereby enabling the introduction of a cell discontinuous transmission mechanism to achieve energy saving for the cell.

Optionally, in a case that the target configuration information is the first configuration information or the second configuration information, the determining, by the terminal based on the target configuration information, at least one of the first discontinuous transmission pattern and the first discontinuous transmission active time of the target cell includes:
determining, by the terminal based on the configuration information to be used by the target cell, at least one of the first discontinuous transmission pattern and the first discontinuous transmission active time of the target cell in a case that the terminal receives a first activation indication sent by a network-side device; where
the first activation indication is used to indicate activation of the target configuration information or activation of cell discontinuous transmission.

In the embodiments of the present application, the first activation indication can be understood as an activation indication for the first configuration information or the second configuration information, or as an activation indication for the cell discontinuous transmission. For example, when receiving the first activation indication, the terminal determines that the cell discontinuous transmission is activated and determines the first discontinuous transmission active time.

Optionally, the first activation indication may be an explicit indication or an implicit indication.

Optionally, in some embodiments, the first activation indication carries a configuration information identifier, and the target cell is a cell configured with target configuration information corresponding to the configuration information identifier.

In the embodiments of the present application, the first activation indication can be understood as an activation indication for the cell discontinuous transmission. Upon receiving the activation indication, the terminal can control the cell configured with target configuration information corresponding to the configuration information identifier to activate discontinuous transmission.

Optionally, in some embodiments in a case that the target configuration information is the first configuration information or the second configuration information, after the determining, by the terminal based on the configuration information to be used by the target cell, at least one of a first discontinuous transmission pattern and a first discontinuous transmission active time of the target cell, the method further includes:
receiving, by the terminal from the network-side device, first indication information, where the first indication information is used to indicate that a first cell is to use the target configuration information; and
determining, by the terminal, that the first cell is to use the target configuration information; where
the first cell is a cell that has not used the target configuration information.

Optionally, the first indication information may explicitly or implicitly indicate that the first cell is to use the target configuration information.

In the embodiments of the present application, the first cell can include at least one of a cell that has not activated cell discontinuous transmission and a cell that has activated cell discontinuous transmission but is using other configuration information.

Optionally, in a case that the target configuration information is the first configuration information, the method further includes at least one of the following:
not expecting, by the terminal, the network-side device to configure the second configuration information;
not expecting, by the terminal, the network-side device to configure the third configuration information;
releasing, by the terminal, the second configuration information; or
releasing, by the terminal, the third configuration information.

Optionally, "not expecting, by the terminal, the network-side device to configure the second configuration information" can be understood as the network-side device not being allowed to configure the second configuration information for the terminal; and "not expecting, by the terminal, the network-side device to configure the third configuration information" can be understood as the network-side device not being allowed to configure the third configuration information for the terminal.

Optionally, in some embodiments in a case that the target configuration information is the second configuration information, the method further includes at least one of the following:
not expecting, by the terminal, the network-side device to configure the third configuration information; or
releasing, by the terminal, the third configuration information.

Optionally, "not expecting, by the terminal, the network-side device to configure the third configuration information" can be understood as the network-side device not being allowed to configure the third configuration information for the terminal.

Optionally, when the network-side device has configured multiple sets of target configuration information for the terminal and indicates that the cell discontinuous transmission (DTX) function is enabled, it also indicates which set of target configuration information is to be used.

Optionally, the first discontinuous transmission active time satisfies at least one of the following:
in a case that the target configuration information is the first configuration information, the first discontinuous transmission active time includes a time during which the on-duration timer of the first configuration information is running;
in a case that the target configuration information is the second configuration information, the first discontinuous transmission active time includes a time during which the on-duration timer, inactivity timer, the uplink retransmission timer, downlink retransmission timer, or sidelink retransmission timer of the second configuration information is running; or
in a case that the target configuration information is the fourth configuration information, the first discontinuous transmission active time includes a time during which the on-duration timer, inactivity timer, the uplink retransmission timer, downlink retransmission timer, or sidelink retransmission timer of the fourth configuration information is running.

In the embodiments of the present application, the time during which a timer or time window is running can be understood as or replaced with the running time during which the timer or time window is in an active state.

Optionally, in some embodiments, the first discontinuous transmission active time may further include at least one of the following:
a time during which the ra-ContentionResolutionTimer or msgB-ResponseWindow is running;
a time during which an SR is in a pending state after being sent on PUCCH; or
a period during which the UE awaits a first PDCCH indicating new transmission after receiving a CFRA RAR.

Optionally, in a case that the target configuration information includes the target information and the third configuration information, the method further includes at least one of the following:
determining, by the terminal, that a second cell is to use the target information in a case that second indication information sent by a network-side device is received, where the second cell is a cell that has not used the target information;
determining, by the terminal, that a third cell is to use the target information in a case that third indication information sent by a network-side device is received, where the third cell is a cell using the third configuration information; or
determining, by the terminal, that a fourth cell is to use the third configuration information in a case that fourth indication information sent by a network-side device is received, where the fourth cell is a cell using the target information; where
the target information is the first configuration information, the second configuration information, or the fourth configuration information.

Optionally, the second indication information may explicitly or implicitly indicate that the second cell is to use the target information; the third indication information can explicitly or implicitly indicate that the third cell is to use the target information; and the fourth indication information can explicitly or implicitly indicate that the fourth cell is to use the third configuration information.

Optionally, in some embodiments, in a case that the target configuration information includes the target information and the third configuration information, the determining, by the terminal based on the configuration information to be used by the target cell, at least one of a first discontinuous transmission pattern and a first discontinuous transmission active time of the target cell includes:
determining, by the terminal based on a target parameter in the configuration information to be used by the target cell, at least one of the first discontinuous transmission pattern and the first discontinuous transmission active time of the target cell; where
the target parameter satisfies at least one of the following:
   in a case that the target information does not include a first parameter, the target parameter includes a second parameter in the third configuration information corresponding to the first parameter;
   in a case that the target information includes a third parameter and that the third configuration information includes a fourth parameter corresponding to the third parameter, the target parameter includes the third parameter and does not include the fourth parameter;
   in a case that the target information includes a fifth parameter and that the third configuration information includes a sixth parameter corresponding to the fifth parameter, the target parameter includes the sixth parameter and does not include the fifth parameter;
   in a case that the long cycle in the third configuration information is not a positive integer multiple of the cycle in the target information, the target parameter is a parameter in the third configuration information;
   in a case that the long cycle in the third configuration information is a positive integer multiple of the cycle in the target information, the target parameter is a parameter in the target information; or
   in a case that the long cycle in the third configuration information is less than the cycle in the target information, the target parameter is a parameter in the target information; where
   the target information is the first configuration information, the second configuration information, or the fourth configuration information.

In the embodiments of the present application, the first parameter, third parameter, or fifth parameter may include at least one of the following: onDurationTimer, SlotOffset, StartOffset, LongCycle, LongCycleStartOffset, ShortCycle, ShortCycleTimer, InactivityTimer, HARQ-RTT-TimerDL, HARQ-RTT-TimerUL, HARQ-RTT-TimerSL, retransmissionTimerDL, retransmissionTimerUL, and retransmissionTimerSL. The second parameter, fourth parameter, or sixth parameter includes at least one of the following: drx-onDurationTimer, drx-SlotOffset, drx-LongCycleStartOffset, drx-ShortCycle, drx-ShortCycleTimer, drx-InactivityTimer, drx-HARQ-RTT-TimerDL, drx-HARQ-RTT-TimerUL, drx-HARQ-RTT-TimerSL, drx-RetransmissionTimerDL, drx-RetransmissionTimerUL, and drx-RetransmissionTimerSL.

It should be understood that the correspondence between the first parameter and the second parameter, the correspondence between the third parameter and the fourth parameter, and the correspondence between the fifth parameter and the sixth parameter satisfy at least one of the following:
onDurationTimer corresponds to drx-onDurationTimer; SlotOffset corresponds to drx-SlotOffset; StartOffset corresponds to the StartOffset indicated in drx-LongCycleStartOffset; LongCycle corresponds to the LongCycle indicated in drx-LongCycleStartOffset; LongCycleStartOffset corresponds to drx-LongCycleStartOffset; ShortCycle corresponds to drx-ShortCycle; ShortCycleTimer corresponds to drx-ShortCycleTimer; InactivityTimer corresponds to drx-InactivityTimer; HARQ-RTT-TimerDL corresponds to drx-HARQ-RTT-TimerDL; HARQ-RTT-TimerUL corresponds to drx-HARQ-RTT-TimerUL; HARQ-RTT-TimerSL corresponds to drx-HARQ-RTT-TimerSL; retransmissionTimerDL corresponds to drx-RetransmissionTimerDL; retransmissionTimerUL corresponds to drx-RetransmissionTimerUL; or retransmissionTimerSL corresponds to drx-RetransmissionTimerSL.

For example, for the case of the first parameter and the second parameter, in a case that the second configuration information does not include InactivityTimer, the target parameter includes drx-InactivityTimer in the third configuration information. For the case of the third parameter and the fourth parameter, it can be understood that when parameters with corresponding meanings are present in both the target information and the third configuration information, the parameters in the target information take precedence. For the case of the fifth parameter and the sixth parameter, it can be understood that when parameters with corresponding meanings are present in both the target information and the third configuration information, the parameters in the third configuration information take precedence.

Optionally, in a case that the target information includes the short cycle, the cycle in the target information is the long cycle. In other words, the cycle in the target information can be understood as the cycle or the long cycle. In a case that the target information does not include the short cycle, the cycle in the target information is understood as the cycle; and in a case that the target information includes the short cycle, the cycle in the target information is understood or replaced as the long cycle.

Optionally, in some embodiments, in a case that the target configuration information includes the target information and the third configuration information, the determining, by the terminal based on the configuration information to be used by the target cell, at least one of a first discontinuous transmission pattern and a first discontinuous transmission active time of the target cell includes:
determining, by the terminal based on the target information, at least one of a second discontinuous transmission pattern and a second discontinuous transmission active time, and determining, based on the third configuration information, at least one of a third discontinuous transmission pattern and a third discontinuous transmission active time; and
performing, by the terminal, a first operation, where the first operation includes at least one of the following:
   determining an intersection or a union of the second discontinuous transmission pattern and the third discontinuous transmission pattern as the first discontinuous transmission pattern of the target cell; or
   determining an intersection or a union of the second discontinuous transmission active time and the third discontinuous transmission active time as the first discontinuous transmission active time of the target cell.

Optionally, the determining the first discontinuous transmission pattern based on an intersection can be understood as: determining the second discontinuous transmission pattern based on a timer configured by the target information, determining the third discontinuous transmission pattern based on a timer configured by the third configuration information, and finally taking the intersection of the second discontinuous transmission pattern and the third discontinuous transmission pattern to obtain the first discontinuous transmission pattern. In this case, the duration in the finally resulting first discontinuous transmission pattern can be understood as a time during which the timer configured by the target information and the timer configured by the third configuration information are both running.

Optionally, the determining the first discontinuous transmission pattern based on a union can be understood as: determining the second discontinuous transmission pattern based on a timer configured by the target information, determining the third discontinuous transmission pattern based on a timer configured by the third configuration information, and finally taking the union of the second discontinuous transmission pattern and the third discontinuous transmission pattern to obtain the first discontinuous transmission pattern. In this case, the duration in the finally resulting first discontinuous transmission pattern can be understood as a time during which either the timer configured by the target information or the timer configured by the third configuration information is running.

Optionally, the determining the first discontinuous transmission active time based on an intersection can be understood as: determining the second discontinuous transmission active time based on a timer configured by the target information, determining the third discontinuous transmission active time based on a timer configured by the third configuration information, and finally taking the intersection of the second discontinuous transmission active time and the third discontinuous transmission active time to obtain the first discontinuous transmission active time. In this case, the finally resulting first discontinuous transmission active time is a time during which the timer configured by the target information and the timer configured by the third configuration information are both running.

Optionally, the determining the first discontinuous transmission active time based on a union can be understood as: determining the second discontinuous transmission active time based on a timer configured by the target information, determining the third discontinuous transmission active time based on a timer configured by the third configuration information, and finally taking the union of the second discontinuous transmission active time and the third discontinuous transmission active time to obtain the first discontinuous transmission active time. In this case, the finally resulting first discontinuous transmission active time is a time during which either the timer configured by the target information or the timer configured by the third configuration information is running.

Optionally, in some embodiments, at least one of the second discontinuous transmission pattern and the second discontinuous transmission active time is determined based on a seventh parameter in the target information, and at least one of the third discontinuous transmission pattern and the third discontinuous transmission active time is determined based on an eighth parameter in the third configuration information corresponding to the seventh parameter.

In the embodiments of the present application, the definition of the seventh parameter is the same as that of the third parameter, and the definition of the eighth parameter is the same as that of the fourth parameter. Their correspondence can refer to the above embodiments and is not be repeated here.

When corresponding parameters in both the target information and the third configuration information are configured in the embodiments of the present application, the intersection or union or the larger/smaller value of the discontinuous transmission active times determined based on the two is taken to determine the cell discontinuous transmission pattern (pattern) and the discontinuous transmission active time, so as to achieve purposes such as UE power saving and improved scheduling flexibility.

Optionally, in some embodiments, in a case that the first discontinuous transmission active time is an intersection of the second discontinuous transmission active time and the third discontinuous transmission active time, the first discontinuous transmission active time includes at least one of the following:
a time during which the on-duration timer, inactivity timer, the uplink retransmission timer, downlink retransmission timer, or sidelink retransmission timer of the target information is running;
a time during which the discontinuous reception on-duration timer, discontinuous reception inactivity timer, uplink discontinuous reception retransmission timer, downlink discontinuous reception retransmission timer, or sidelink discontinuous reception retransmission timer of the third configuration information is running; or
an intersection of an active time determined based on a time during which the discontinuous reception on-duration timer, discontinuous reception inactivity timer, uplink discontinuous reception retransmission timer, downlink discontinuous reception retransmission timer, or sidelink discontinuous reception retransmission timer of the third configuration information is running and the active time determined based on the on-duration timer of the target information.

Optionally, in some embodiments, the time during which the on-duration timer of the target information is running is greater than the time during which the discontinuous reception on-duration timer of the third configuration information is running, or a discontinuous reception on-duration timer value configured by the target information is greater than a timer value of the on-duration timer configured by the third configuration information.

Optionally, in some embodiments, the first discontinuous transmission active time further includes at least one of the following:
a time during which a scheduling request prohibit timer, a random access response window, a random access contention resolution timer, or a message B response window is running; or
an intersection of a time during which a scheduling request prohibit timer, a random access response window, a random access contention resolution timer, or a message B response window is running and the active time determined based on the on-duration timer of the target information.

Optionally, in some embodiments, the determining, by the terminal based on the target configuration information, the configuration information to be used by the target cell includes at least one of the following:
in a case that a first cycle indicated by the target information is greater than or equal to a second cycle indicated by the third configuration information, determining, by the terminal, that the cycle in the configuration information to be used by the target cell is the first cycle;
in a case that a second cycle indicated by the third configuration information is an integer multiple of a first cycle indicated by the target information, determining, by the terminal, that the cycle in the configuration information to be used by the target cell is the second cycle; or
in a case that a second cycle indicated by the third configuration information is greater than a first cycle indicated by the target information and the second cycle is not an integer multiple of the first cycle, determining, by the terminal, that the cycle in the configuration information to be used by the target cell is a target cycle; where
the target information is the first configuration information, the second configuration information, or the fourth configuration information, and the target cycle satisfies any one of the following:
   the target cycle is the first cycle;
   the target cycle is an integer multiple of the first cycle, and an absolute value of a difference between the target cycle and the second cycle is minimized;
   the target cycle is an integer multiple of the first cycle and is a minimum cycle greater than the second cycle;
   the target cycle is an integer multiple of the first cycle and is a maximum cycle less than the second cycle; or
   the target cycle is N times the first cycle, where N is configured by the network-side device, and N is a positive integer.

Optionally, the first cycle and the second cycle satisfy at least one of the following:
when the first cycle is the cycle in the target information, the second cycle is the long cycle in the third configuration information;
when the first cycle is the long cycle in the target information, the second cycle is the long cycle in the third configuration information; or
when the first cycle is the short cycle in the target information, the second cycle is the short cycle in the third configuration information.

For a better understanding of the present application, the following provides detailed explanations through some examples.

### Example 1: Determining discontinuous transmission pattern or discontinuous transmission active time using only first configuration information

In this embodiment, UE determines the discontinuous transmission pattern or discontinuous transmission active time of the target cell using only the first configuration information. When the network-side device has configured the first configuration information for the UE, the UE determines that the discontinuous transmission active time of the target cell includes at least one of the following times:
a time during which the onDurationTimer of the first configuration information is running;
a time during which the ra-ContentionResolutionTimer or msgB-ResponseWindow is running;
a time during which an SR is in a pending state after being sent on PUCCH; or
a period during which the UE awaits a first PDCCH indicating new transmission after receiving a CFRA RAR.

Optionally, the UE determining the discontinuous transmission active time of the target cell includes: when the UE receives a first configuration information activation indication or a cell DTX/DRX activation indication sent by the network, the cell DTX/DRX of the target cell is activated, and the discontinuous transmission active time of the target cell is determined.

Optionally, the target cell is a cell that needs to use the first configuration information to determine the discontinuous transmission pattern or discontinuous transmission active time. For example, cell DTX/DRX may be configured such that certain cells share a common Cell DTX/DRX configuration.

Optionally, the terminal receives a cell DTX/DRX activation indication from the network-side device, where the indication carries a first configuration information identifier, and the UE activates cell DTX/DRX for cells configured with the first configuration information corresponding to the first configuration information identifier.

Optionally, when the UE receives indication information 1 from the network-side device, all cells that has not used the first configuration information to determine the discontinuous transmission pattern switch to using the first configuration information to determine the discontinuous transmission pattern.

For example, the network-side device has activated three cells for the terminal. If the network-side device has activated cell DTX/DRX for cell 1 using the first configuration information, while cell DTX/DRX is not activated for the other cells at this time, the other cells also switch to using the first configuration information to determine the discontinuous transmission pattern if the UE receives indication information 1 from the network-side device.

Optionally, when the network-side device has configured the first configuration information for the UE, at least one of the following rules is executed:
the network-side device is not allowed to configure the second configuration information for the UE;
the network-side device is not allowed to configure the third configuration information for the UE;
the UE releases the second configuration information; or
the UE releases the third configuration information.

Optionally, the network-side device configures multiple sets of first configuration information for the UE and indicates that the cell DTX/DRX function is enabled, it also indicates which set of first configuration information to be used.

### Example 2: Determining discontinuous transmission pattern or discontinuous transmission active time using only second configuration information

In this embodiment, the UE determines the discontinuous transmission pattern or discontinuous transmission active time of the target cell using only the second configuration information. The UE uses the onDurationTimer, StartOffset, SlotOffset, Cycle/Periodicity, ShortCycle, and ShortCycleTimer in the second configuration information to determine the discontinuous transmission pattern of the target cell. When the network-side device has configured the second configuration information for the UE, and the second configuration information carries at least all parameters except ShortCycle and ShortCycleTimer, the UE determines that the discontinuous transmission active time of the target cell includes at least one of the following times:
a time during which the onDurationTimer, InactivityTimer, retransmissionTimerDL, retransmissionTimerUL, or retransmissionTimerSL of the second configuration information is running;
a time during which the ra-ContentionResolutionTimer or msgB-ResponseWindow is running;
a time during which an SR is in a pending state after being sent on PUCCH; or
a period during which the UE awaits a first PDCCH indicating new transmission after receiving a CFRA RAR.

Optionally, the UE determining the discontinuous transmission active time of the target cell includes: when the UE receives a second configuration information activation indication or a cell DTX/DRX activation indication sent by the network, the cell DTX/DRX of the target cell is activated, and the discontinuous transmission active time of the target cell is determined.

Optionally, the target cell is a cell that needs to use the second configuration information to determine the discontinuous transmission pattern or discontinuous transmission active time.

Optionally, the terminal receives a cell DTX/DRX activation indication from the network-side device, where the indication carries a second configuration information identifier, and the UE activates cell DTX/DRX for cells configured with the second configuration information corresponding to the second configuration information identifier.

Optionally, when the UE receives indication information 2 from the network-side device, all cells that has not used the second configuration information to determine the discontinuous transmission pattern switch to using the second configuration information to determine the discontinuous transmission pattern.

For example, the network-side device has activated three cells for the terminal. If the network-side device has activated cell DTX/DRX for cell 1 using the second configuration information, while cell DTX/DRX is not activated for the other cells at this time, the other cells also switch to using the second configuration information to determine the discontinuous transmission pattern if the UE receives indication information 2 from the network-side device.

Optionally, when the network-side device has configured the second configuration information for the UE, at least one of the following rules is executed:
the network-side device is not allowed to configure the third configuration information for the UE; or
the UE releases the third configuration information.

Optionally, when the network-side device configures multiple sets of second configuration information for the UE and indicates that the cell DTX/DRX function is enabled, it also indicates which set of second configuration information to be used.

### Example 3: Determining discontinuous transmission pattern or discontinuous transmission active time of target cell using first configuration information and second configuration information

If the network-side device has configured the first configuration information for the UE but does not configure the second configuration information, the discontinuous transmission pattern and discontinuous transmission active time can be determined according to Example 1.

If the network-side device has configured both the first configuration information and the second configuration information for the UE, the first configuration information and the second configuration information may be configured in a same information element or in different information elements. The UE may use the content of these two sets of configuration information to jointly determine the discontinuous transmission pattern and discontinuous transmission active time.

For example, the first configuration information includes the onDurationTimer, StartOffset, SlotOffset, Cycle/Periodicity, ShortCycle, and ShortCycleTimer, and the second configuration information includes the InactivityTimer, HARQ-RTT-TimerDL, HARQ-RTT-TimerUL, HARQ-RTT-TimerSL, retransmissionTimerDL, retransmissionTimerUL, and retransmissionTimerSL.

The UE can determine fourth configuration information based on the first configuration information and the second configuration information, where the fourth configuration information includes parameters of the second configuration information and the first configuration information. The specific implementation of determining the discontinuous transmission pattern or discontinuous transmission active time of the target cell based on the fourth configuration information can refer to Example 2 above and is not repeated here.

### Example 4: Determining discontinuous transmission pattern or discontinuous transmission active time of target cell using second configuration information and third configuration information

For various implementations of Embodiment 4, the terminal can perform at least one of the following behaviors.

Behavior 1: In a case that second indication information sent by a network-side device is received, the terminal determines that a second cell is to use the second configuration information, where the second cell is a cell that has not used the second configuration information.

For example, the network-side device has activated three cells for the UE but does not configure the third configuration information. If the network-side device has activated cell DTX/DRX for cell 1 using the second configuration information, while cell DTX/DRX is not activated for the other cells at this time, the other cells also switch to using the second configuration information if the UE receives the second indication information from the network.

Behavior 2: In a case that third indication information sent by a network-side device is received, the terminal determines that a third cell is to use the second configuration information, where the third cell is a cell using the third configuration information.

For example, the network-side device has activated three cells for the UE and has configured the third configuration information, with the three cells belonging to a same DRX group. If the network-side device has activated cell DTX/DRX for cell 1 using the second configuration information, while the other cells continue to use the third configuration information, the other cells also switch to using the second configuration information if the UE receives the third indication information from the network.

Behavior 3: In a case that fourth indication information sent by a network-side device is received, the terminal determines that a fourth cell is to use the third configuration information, where the fourth cell is a cell using the second configuration information.

For example, the network-side device has activated three cells for the UE and has configured the third configuration information, with the three cells belonging to a same DRX group. If the network-side device has activated cell DTX/DRX for cells 1 and 2 using the second configuration information, while the other cells continue to use the third configuration information, cells 1 and 2 switch to using the third configuration information to determine the DRX Pattern if the UE receives the fourth indication information from the network-side device, such as a cell DTX/DRX deactivation indication or a second configuration information deactivation indication.

Optionally, Example 4 of the present application includes the following seven implementations, where different implementations can be further combined. Each implementation is described in detail below.

Implementation 1: Handling when certain parameters (that is, first parameters) are not configured in the second configuration information.

In this implementation, if the network-side device has configured the third configuration information for the UE and the second configuration information does not include a first parameter, the UE uses a second parameter corresponding to the first parameter in the third configuration information to determine a pattern or discontinuous transmission active time when the cell DTX/DRX is active.

For example, if the second configuration information includes the onDurationTimer, SlotOffset, CycleStartOffset, and Cycle/Periodicity, but does not include InactivityTimer, HARQ-RTT-TimerDL, HARQ-RTT-TimerUL, HARQ-RTT-TimerSL, retransmissionTimerDL, retransmissionTimerUL, and retransmissionTimerSL, the InactivityTimer, HARQ-RTT-TimerDL, HARQ-RTT-TimerUL, HARQ-RTT-TimerSL, retransmissionTimerDL, retransmissionTimerUL, retransmissionTimerSL, ShortCycle, and ShortCycleTimer used by the UE to determine the discontinuous transmission active time are corresponding drx-InactivityTimer, drx-HARQ-RTT-TimerDL, drx-HARQ-RTT-TimerUL, drx-HARQ-RTT-TimerSL, drx-RetransmissionTimerDL, drx-RetransmissionTimerUL, and drx-RetransmissionTimerSL in the third configuration information. That is, the UE determines that the discontinuous transmission active time includes at least one of the following times:
a time during which the drx-onDurationTimer, drx-InactivityTimer, drx-RetransmissionTimerDL, drx-RetransmissionTimerUL, or drx-RetransmissionTimerSL of the third configuration information is running;
a time during which the ra-ContentionResolutionTimer or msgB-ResponseWindow is running;
a time during which an SR is in a pending state after being sent on PUCCH; or
a period during which the UE awaits a first PDCCH indicating new transmission after receiving a CFRA RAR.

For another example, if the second configuration information does not include the onDurationTimer, SlotOffset, CycleStartOffset, Cycle/Periodicity, ShortCycle, and ShortCycleTimer, when receiving an indication from the network-side device to enable the cell DTX/DRX function, the onDurationTimer, SlotOffset, CycleStartOffset, and Cycle/Periodicity used by the UE to determine the discontinuous transmission pattern are corresponding drx-onDurationTimer, drx-SlotOffset, drx-LongCycleStartOffset, drx-ShortCycle, and drx-ShortCycleTimer in the third configuration information.

In other words, if a parameter is not configured in the second configuration information, the parameter with corresponding meaning in the third configuration information is used, such as the onDurationTimer of the second configuration information corresponding to the drx-onDurationTimer of the third configuration information, and the InactivityTimer of the second configuration information corresponding to the drx-InactivityTimer of the third configuration information.

Implementation 2: When parameters with corresponding meanings are present in both second configuration information and third configuration information, parameters in second configuration information take precedence.

In this implementation, if the network-side device configures the third configuration information for the UE and the second configuration information includes a third parameter, the UE uses the third parameter in the second configuration information to determine the pattern or discontinuous transmission active time when the cell DTX/DRX is active.

In this implementation, when parameters with corresponding meanings are configured in both the second configuration information and the third configuration information, the parameters in the second configuration information take precedence.

For example, if the second configuration information includes at least one of the following parameters: InactivityTimer, HARQ-RTT-TimerDL, HARQ-RTT-TimerUL, HARQ-RTT-TimerSL, retransmissionTimerDL, retransmissionTimerUL, retransmissionTimerSL, ShortCycle, and ShortCycleTimer, the InactivityTimer, HARQ-RTT-TimerDL, HARQ-RTT-TimerUL, HARQ-RTT-TimerSL, retransmissionTimerDL, retransmissionTimerUL, and retransmissionTimerSL used by the UE to determine the discontinuous transmission active time correspond to the InactivityTimer, HARQ-RTT-TimerDL, HARQ-RTT-TimerUL, HARQ-RTT-TimerSL, retransmissionTimerDL, retransmissionTimerUL, and retransmissionTimerSL in the second configuration information.

The same applies to the onDurationTimer, SlotOffset, CycleStartOffset, Cycle/Periodicity, ShortCycle, and ShortCycleTimer used by the UE to determine the discontinuous transmission pattern, and details are not repeated here.

### Implementation 3: When parameters with corresponding meanings are present in the second configuration information and the third configuration information, parameters in third configuration information take precedence

In this implementation, if the network-side device has configured the third configuration information for the UE and the second configuration information includes a fifth parameter, the UE uses a sixth parameter corresponding to the fifth parameter in the third configuration information to determine the pattern or discontinuous transmission active time when the cell DTX/DRX is active.

Unlike Implementation 2, in this implementation, when parameters with corresponding meanings are configured in both the second configuration information and the third configuration information, the parameters in the third configuration information take precedence.

For example, if the second configuration information includes at least one of the following parameters: InactivityTimer, HARQ-RTT-TimerDL, HARQ-RTT-TimerUL, HARQ-RTT-TimerSL, retransmissionTimerDL, retransmissionTimerUL, retransmissionTimerSL, ShortCycle, and ShortCycleTimer, the UE determines that the InactivityTimer, HARQ-RTT-TimerDL, HARQ-RTT-TimerUL, HARQ-RTT-TimerSL, retransmissionTimerDL, retransmissionTimerUL, and retransmissionTimerSL used for the discontinuous transmission active time correspond to the InactivityTimer, HARQ-RTT-TimerDL, HARQ-RTT-TimerUL, HARQ-RTT-TimerSL, retransmissionTimerDL, retransmissionTimerUL, and retransmissionTimerSL in the third configuration information.

The same applies to the onDurationTimer, SlotOffset, CycleStartOffset, Cycle/Periodicity, ShortCycle, and ShortCycleTimer used by the UE to determine the discontinuous transmission pattern, and details are not repeated here.

### Implementation 4: Determination of pattern and discontinuous transmission active time using intersection or union of patterns and discontinuous transmission active times respectively determined from second and third configuration information

In this implementation, if the network-side device has configured the third configuration information for the UE, and the second configuration information includes a seventh parameter, with the third configuration information including an eighth parameter corresponding to the seventh parameter, the UE performs at least one of the following:
determining a pattern of the target cell using an intersection or union of a pattern determined based on the seventh parameter and a pattern determined based on the eighth parameter; or
determining a discontinuous transmission active time of the target cell using an intersection or union of a discontinuous transmission active time determined based on the seventh parameter and a discontinuous transmission active time determined based on the eighth parameter.

In this implementation, when corresponding parameters in both the second configuration information and the third configuration information are configured, the intersection or union or the larger/smaller value of the two is taken to determine the cell discontinuous transmission pattern and discontinuous transmission active time, so as to achieve purposes such as UE power saving and improved scheduling flexibility.

For example, if a timer value (or running time) of the InactivityTimer in the second configuration information is 10 ms, and a timer value of the drx-InactivityTimer in the third configuration information is 5 ms, the UE can take an intersection or the smaller value of the two values, thereby determining that the timer value of the InactivityTimer used for the discontinuous transmission active time is 5 ms. This approach helps reduce UE power consumption. Since the UE has already been configured with a timer value of 5 ms of InactivityTimer in the third configuration information, indicating that 5 ms meets performance requirements of the UE, there is no need for the UE to monitor according to the larger value in the second configuration information, which would increase power consumption.

For example, the network-side device has activated three cells for the UE, with the three cells belonging to a same DRX group. If the network-side device has activated cell DTX/DRX for cell 1 using the second configuration information, considering that the UE may still need to perform DRX according to the third configuration information in cells 2 and 3, a final discontinuous transmission pattern can be determined by the UE using the union of the discontinuous transmission pattern activated in cell 1 and the UE DRX pattern of cells 2 and 3.

For example, if the second configuration information indicates a cell DTX/DRX cycle of 640 ms, and the third configuration information indicates a UE DRX cycle of 320 ms, the UE may take the intersection of the two pattern cycles, that is, 640 ms, as the final pattern cycle. Since the cell DTX/DRX cycle is 640 ms, it is unnecessary for the UE to perform more frequent monitoring at a 320 ms interval, which would cause unnecessary power consumption for the UE.

Implementation 5: Extension of discontinuous transmission active time due to data transmission needs

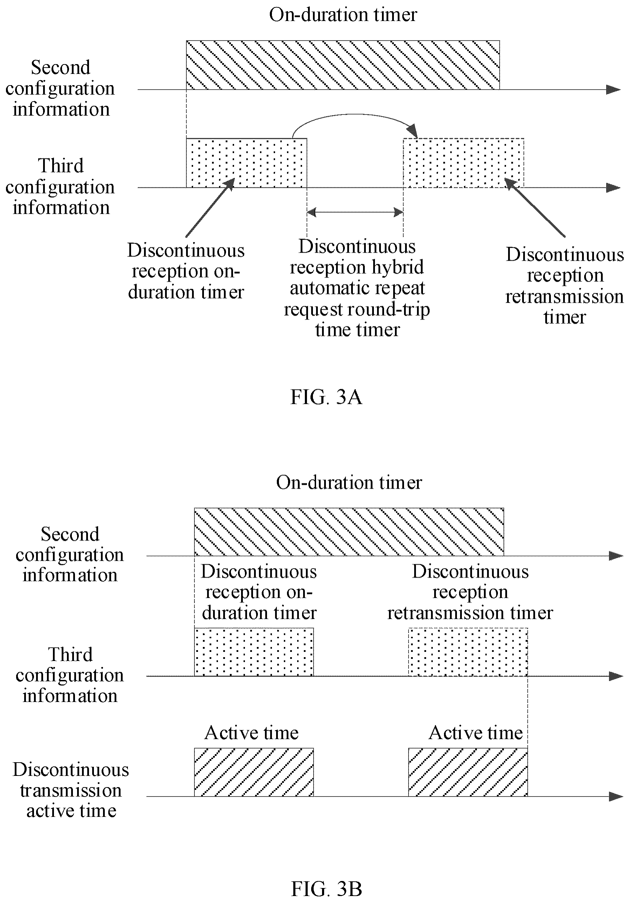

For Implementation 4, if the UE determines the discontinuous transmission active time based on the intersection of the discontinuous transmission active times respectively determined from two sets of configuration information, one possible case is that the on duration indicated by the third configuration information is shorter than the on duration indicated by the second configuration information, so the final discontinuous transmission active time is determined according to the third configuration information, as shown in FIG. 3A.

For the case in FIG. 3A, according to legacy UE DRX, if the UE receives erroneous data within the window during which the drx-onDurationTimer is running and requires retransmission from the network-side device, the UE starts the drx-HARQ-RTT-Timer at the position where the data is received, starts the drx-RetransmissionTimer after the drx-HARQ-RTT-Timer expires, and monitors scheduling from the network-side device during the operation of the drx-RetransmissionTimer. Here, legacy UE DRX can also be referred to as normal (normal) UE DRX.

If cell DTX/DRX defines that no data is transmitted or received during the cell DTX/DRX off duration, the UE does not receive data after the drx-onDurationTimer expires. However, for the case in FIG. 3A, the window during which the drx-RetransmissionTimer is running may at least partially still fall within the entire onDurationTimer running window of cell DTX/DRX. Therefore, in this case, in addition to being determined based on the intersection of the discontinuous transmission active times respectively determined from the second configuration information and the third configuration information, the discontinuous transmission active time should also include a time during which the drx-RetransmissionTimer is running. The same applies to the InactivityTimer. That is:

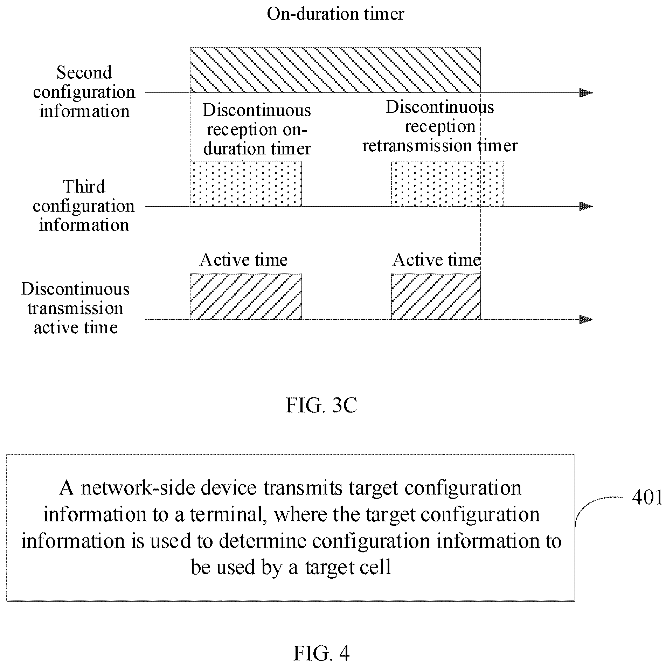

If the UE determines the discontinuous transmission active time based on the intersection of the discontinuous transmission active times respectively determined from the second configuration information and the third configuration information, the discontinuous transmission active time further includes at least one of the following:
a time during which the InactivityTimer, retransmissionTimerDL, retransmissionTimerUL, or retransmissionTimerSL of the second configuration information is running, or a time during which the drx-InactivityTimer, drx-RetransmissionTimerDL, drx-RetransmissionTimerUL, or drx-RetransmissionTimerSL of the third configuration information is running; optionally, the drx-onDurationTimer of the third configuration information is smaller than the onDurationTimer of the second configuration information, for example, the determined active time of the target cell may be as shown in FIG. 3B;
an intersection of the discontinuous transmission active time determined based on a time during which the InactivityTimer, retransmissionTimerDL, retransmissionTimerUL, or retransmissionTimerSL of the third configuration information is running and a discontinuous transmission active time determined based on the onDurationTimer of the second configuration information, as shown in FIG. 3C.

For timers related to SR and RACH, a similar situation may occur as with the drx-RetransmissionTimer. Therefore, in a case that the UE determines the discontinuous transmission active time based on the intersection of the discontinuous transmission active times respectively determined from the second configuration information and the third configuration information, it is determined that the active time of the target cell further includes at least one of the following:
a time during which the sr-prohibitTimer, ra-responseWindow, ra-ContentionResolutionTimer, or msgB-ResponseWindow is running; or
an intersection of a time during which the sr-prohibitTimer, ra-responseWindow, ra-ContentionResolutionTimer, or msgB-ResponseWindow is running and a discontinuous transmission active time determined based on the onDurationTimer of the second configuration information.

Implementation 6: Different cycles indicated by second configuration information and third configuration information

Since the cycles of cell DTX/DRX configuration and UE DRX configuration may differ, if both the cell DTX/DRX mechanism and the UE DRX mechanism operate simultaneously, and the UE DRX cycle is not a multiple of the cell DTX/DRX cycle, the cell may find it difficult to align the cycle pattern of cell DTX/DRX with the cycle pattern of UE DRX, and vice versa. Therefore, the method considered in this implementation is:
If the network-side device has configured the third configuration information for the UE, and the second configuration information includes a parameter indicating the cycle (for example, Cycle/Periodicity, ShortCycle), the UE performs at least one of the following:
If the long cycle indicated by the third configuration information is not a positive integer multiple of the cycle indicated in the second configuration information, the UE ignores the configuration in the second configuration information, that is, the UE determines that the parameters used for discontinuous transmission are those in the third configuration information;
If the long cycle indicated by the third configuration information is a positive integer multiple of the cycle indicated in the second configuration information, the UE uses the configuration in the second configuration information, that is, the UE determines that the parameters used for discontinuous transmission are those in the second configuration information; or
If the long cycle indicated by the third configuration information is less than the cycle indicated in the second configuration information, the UE determines that the parameters used for discontinuous transmission are those in the second configuration information.

Optionally, if the second configuration information indicates the short cycle, the cycle indicated in the second configuration information is the long cycle indicated in the second configuration information.

### Implementation 7: Determination of discontinuous transmission cycle

In Implementation 5, some issues with the difference between the cell DTX/DRX cycle and the UE DRX cycle are described. Further, since the cycles of cell DTX/DRX configuration and normal (normal) UE DRX configuration may differ, some issues may arise if the UE simply operates by following the cycle of the cell DTX/DRX configuration.

For example, if the cell DTX/DRX cycle is 40 ms while the long cycle of normal UE DRX is 10 ms, the cell may only transmit and receive in a roughly 10 ms window within the 40 ms since the cell DTX/DRX cycle is configured as 40 ms, so it would be unnecessary for the UE to monitor at the 10 ms cycle of normal UE DRX, which would be power-consuming. For the UE, this may lead to reduced transmission performance, as it originally received data every 10 ms, but due to the cell discontinuous transmission with a 40 ms cycle for energy saving, the UE transmission delay may increase.

For another example, if the cell DTX/DRX cycle is 160 ms while the long cycle of normal UE DRX is 320 ms, it would be unnecessary for the UE to monitor at the 160 ms cycle of cell DTX/DRX. Since original traffic characteristics of the UE determined that a 320 ms cycle meets the requirements of the UE, monitoring at a 160 ms cycle would be more power-consuming for the UE.

For yet another example, if the cell DTX/DRX cycle is 160 ms while the long cycle of normal UE DRX is 256 ms, as mentioned above, monitoring at the shorter cell DTX/DRX cycle is unnecessary for the UE. However, since the long cycle of normal UE DRX is not an integer multiple of the cell DTX/DRX cycle, the network cannot align the normal UE DRX cycle with the cell DTX/DRX cycle. How the UE handles the discontinuous transmission cycle in this scenario is also an issue to be addressed.

In summary, in this implementation, the terminal may determine the discontinuous transmission cycle in the following manner.

In this implementation, if the network-side device has configured the third configuration information for the UE, and the second configuration information includes a parameter indicating the cycle (for example, Cycle/Periodicity, ShortCycle), where the cycle indicated by the second configuration information is T1, and the cycle indicated by the third configuration information is T2, the UE performs at least one of the following:
If T1 is greater than or equal to T2, the UE determines that the cycle used for discontinuous transmission is T1, that is, the cycle indicated by the second configuration information;
If T2 is an integer multiple of T1, the UE determines that the cycle used for discontinuous transmission is T2, that is, the cycle indicated by the third configuration information; or
If T2 is greater than T1 but T2 is not an integer multiple of T1, the UE determines that the cycle used for discontinuous transmission is a target cycle.

The target cycle satisfies any one of the following:
the target cycle that the UE determines to use for discontinuous transmission is T2, that is, the cycle indicated by the third configuration information;
the target cycle that the UE determines to use for discontinuous transmission is T3, where T3 = k * T1, k is a positive integer, and T3 is a cycle value closest to T2; for example, if T1 = 160 ms and T2 = 512 ms, two values taken for T3 and closest to 512 ms are 320 ms and 640 ms, and since 640 ms is closer to 512 ms, the UE determines that the cycle used for discontinuous transmission is T3 = 640 ms;
the target cycle that the UE determines to use for discontinuous transmission is T4, where T4 = k * T1, k is a positive integer, and T4 is a cycle value closest to T2 but not greater than T2; for example, if T1 = 160 ms and T2 = 512 ms, two values taken for T4 and closest to 512 ms are 320 ms and 640 ms, and since 320 < 512 and 640 > 512, the UE determines that the cycle used for discontinuous transmission is T4 = 320 ms; or
the target cycle that the UE determines to use for discontinuous transmission is T5, where T5 = k * T1, k is a positive integer, and T5 is a cycle value closest to T2 but not less than T2; for example, if T1 = 160 ms and T2 = 512 ms, two values taken for T5 and closest to 512 ms are 320 ms and 640 ms, and since 320 < 512 and 640 > 512, the UE determines that the cycle used for discontinuous transmission is T5 = 640 ms.

Optionally, T1 and T2 satisfy at least one of the following:
T1 is the cycle indicated in the second configuration information, T2 is the long cycle indicated in the third configuration information;
T1 is the long cycle indicated in the second configuration information, T2 is the long cycle indicated in the third configuration information; or
T1 is the short cycle indicated in the second configuration information, T2 is the short cycle indicated in the third configuration information.

### Example 5: Determining discontinuous transmission pattern and discontinuous transmission active time using first configuration information, second configuration information, and third configuration information

In this embodiment, through Embodiment 3, the UE can determine the fourth configuration information based on the first configuration information and the second configuration information. Since parameters included in the fourth configuration information are similar to those in the second configuration information, the UE can refer to the implementations of Embodiment 4 in determining the discontinuous transmission pattern and discontinuous transmission active time of the target cell, and details are not repeated here.

### Example 6: Determining discontinuous transmission pattern and discontinuous transmission active time using first configuration information and third configuration information

If the network-side device has configured the first configuration information for the UE but does not configure the third configuration information, the discontinuous transmission pattern and discontinuous transmission active time can be determined according to Embodiment 1.

If the network-side device has configured both the first configuration information and the third configuration information for the UE, the discontinuous transmission pattern and discontinuous transmission active time can be determined by referring to the implementations of Embodiment 4, and details are not repeated here.

Referring to FIG. 4, an embodiment of the present application further provides a transmission processing method. As shown in FIG. 4, the transmission processing method includes:
Step 401: A network-side device sends target configuration information to a terminal, where the target configuration information is used to determine configuration information to be used by a target cell, and the target configuration information includes any one of the following: first configuration information; second configuration information; the first configuration information and third configuration information; the second configuration information and the third configuration information; fourth configuration information; and the fourth configuration information and the third configuration information; where
the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

Optionally, the first configuration information includes at least one of the following parameters: on-duration timer; start offset; slot offset; cycle; short cycle; or short cycle timer.

Optionally, the second configuration information includes at least one of the following parameters:
on-duration timer; start offset; slot offset; cycle; short cycle; short cycle timer; inactivity timer; downlink hybrid automatic repeat request round-trip time timer; uplink hybrid automatic repeat request round-trip time timer; sidelink hybrid automatic repeat request round-trip time timer; uplink retransmission timer; downlink retransmission timer; or sidelink retransmission timer.

Optionally, the method further includes:
sending, by the network-side device to the terminal, a first activation indication, where the first activation indication is used to indicate activation of the target configuration information or activation of cell discontinuous transmission pattern.

Optionally, the first activation indication carries a configuration information identifier, and the target cell is a cell configured with target configuration information corresponding to the configuration information identifier.

Optionally, the method further includes:
sending, by the network-side device to the terminal, first indication information, the first indication information being used to indicate that a first cell is to use the target configuration information; where the first cell is a cell that has not used the target configuration information.

Optionally, the first discontinuous transmission active time satisfies at least one of the following:
in a case that the target configuration information is the first configuration information, the first discontinuous transmission active time includes a time during which the on-duration timer of the first configuration information is running;
in a case that the target configuration information is the second configuration information, the first discontinuous transmission active time includes a time during which the on-duration timer, inactivity timer, the uplink retransmission timer, downlink retransmission timer, or sidelink retransmission timer of the second configuration information is running; or
in a case that the target configuration information is the fourth configuration information, the first discontinuous transmission active time includes a time during which the on-duration timer, inactivity timer, the uplink retransmission timer, downlink retransmission timer, or sidelink retransmission timer of the fourth configuration information is running.

Optionally, in a case that the target configuration information includes the target information and the third configuration information, the method further includes:
sending, by the network-side device to the terminal, at least one of second indication information, third indication information, and fourth indication information; where
the second indication information is used to indicate that a second cell is to use the target information, and the second cell is a cell that has not used the target information; the third indication information is used to indicate that a third cell is to use the target information, and the third cell is a cell using the third configuration information; and the fourth indication information is used to indicate that a fourth cell is to use the third configuration information, and the fourth cell is a cell using the target information.

The transmission processing method provided in the embodiments of the present application can be executed by a transmission processing apparatus. In the embodiments of the present application, the transmission processing apparatus executing the transmission processing method is taken as an example to describe the transmission processing apparatus provided in the embodiments of the present application.

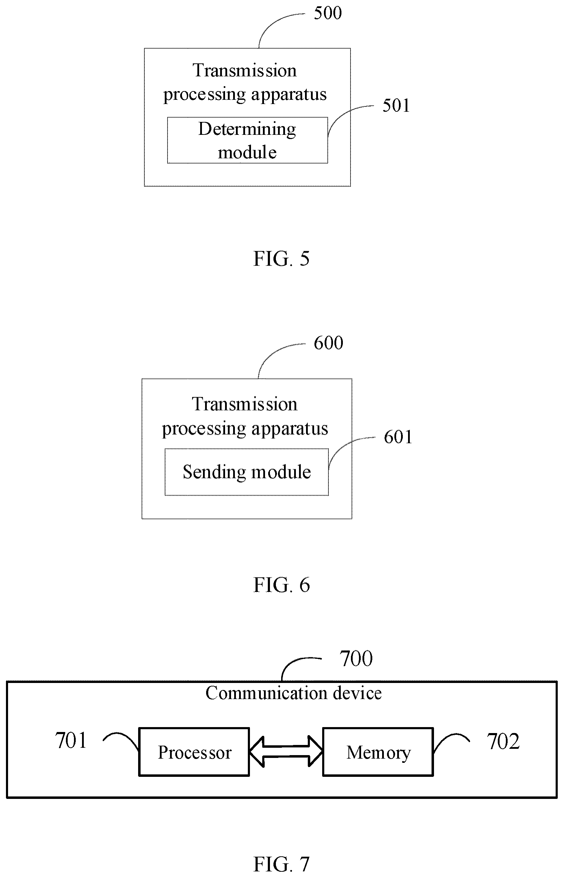

As shown in FIG. 5, an embodiment of the present application further provides a transmission processing apparatus. As shown in FIG. 5, the transmission processing apparatus 500 includes:
a determining module 501 configured to determine, based on target configuration information, configuration information to be used by a target cell, and determine, based on the configuration information to be used by the target cell, at least one of a first discontinuous transmission pattern and a first discontinuous transmission active time of the target cell; where the target configuration information includes any one of the following: first configuration information; second configuration information; the first configuration information and third configuration information; the second configuration information and the third configuration information; fourth configuration information; and the fourth configuration information and the third configuration information; where
the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

Optionally, the first configuration information includes at least one of the following parameters: on-duration timer; start offset; slot offset; cycle; short cycle; or short cycle timer.

Optionally, the second configuration information includes at least one of the following parameters:
on-duration timer; start offset; slot offset; cycle; short cycle; short cycle timer; inactivity timer; downlink hybrid automatic repeat request round-trip time timer; uplink hybrid automatic repeat request round-trip time timer; sidelink hybrid automatic repeat request round-trip time timer; uplink retransmission timer; downlink retransmission timer; or sidelink retransmission timer.

Optionally, the determining module 501 is specifically configured to determine, based on the configuration information to be used by the target cell, at least one of the first discontinuous transmission pattern and the first discontinuous transmission active time of the target cell in a case that the terminal receives a first activation indication sent by a network-side device; where
the first activation indication is used to indicate activation of the target configuration information or activation of cell discontinuous transmission.

Optionally, the first activation indication carries a configuration information identifier, and the target cell is a cell configured with target configuration information corresponding to the configuration information identifier.

Optionally, in a case that the target configuration information is the first configuration information or the second configuration information, the transmission processing apparatus 500 further includes:
a receiving module configured to receive first indication information from a network-side device, where the first indication information is used to indicate that a first cell is to use the target configuration information; and
the determining module 501 is further configured to determine that the first cell is to use the target configuration information; where
the first cell is a cell that has not used the target configuration information.

Optionally, in a case that the target configuration information is the first configuration information, the transmission processing apparatus 500 further includes a processing module configured to perform at least one of the following:
not expecting the network-side device to configure the second configuration information;
not expecting the network-side device to configure the third configuration information;
releasing the second configuration information; or
releasing the third configuration information.

Optionally, in a case that the target configuration information is the second configuration information, the transmission processing apparatus 500 further includes a processing module configured to perform at least one of the following:
not expecting the network-side device to configure the third configuration information; or
releasing the third configuration information.

Optionally, the first discontinuous transmission active time satisfies at least one of the following:
in a case that the target configuration information is the first configuration information, the first discontinuous transmission active time includes a time during which the on-duration timer of the first configuration information is running;
in a case that the target configuration information is the second configuration information, the first discontinuous transmission active time includes a time during which the on-duration timer, inactivity timer, the uplink retransmission timer, downlink retransmission timer, or sidelink retransmission timer of the second configuration information is running;
in a case that the target configuration information is the fourth configuration information, the first discontinuous transmission active time includes a time during which the on-duration timer, inactivity timer, the uplink retransmission timer, downlink retransmission timer, or sidelink retransmission timer of the fourth configuration information is running.

Optionally, in a case that the target configuration information includes the target information and the third configuration information, the determining module 501 is further configured to perform at least one of the following:
determining that a second cell is to use the target information in a case that second indication information sent by a network-side device is received, where the second cell is a cell that has not used the target information;
determining that a third cell is to use the target information in a case that third indication information sent by a network-side device is received, where the third cell is a cell using the third configuration information;
determining that a fourth cell is to use the third configuration information in a case that fourth indication information sent by a network-side device is received, where the fourth cell is a cell using the target information; where
the target information is the first configuration information, the second configuration information, or the fourth configuration information.

Optionally, in a case that the target configuration information includes the target information and the third configuration information, the determining module 501 is specifically configured to:
determine, based on a target parameter in the configuration information to be used by the target cell, at least one of the first discontinuous transmission pattern and the first discontinuous transmission active time of the target cell; where
the target parameter satisfies at least one of the following:
   in a case that the target information does not include a first parameter, the target parameter includes a second parameter in the third configuration information corresponding to the first parameter;
   in a case that the target information includes a third parameter and the third configuration information includes a fourth parameter corresponding to the third parameter, the target parameter includes the third parameter and does not include the fourth parameter;
   in a case that the target information includes a fifth parameter and that the third configuration information includes a sixth parameter corresponding to the fifth parameter, the target parameter includes the sixth parameter and does not include the fifth parameter;
   in a case that the long cycle in the third configuration information is not a positive integer multiple of the cycle in the target information, the target parameter is a parameter in the third configuration information;
   in a case that the long cycle in the third configuration information is a positive integer multiple of the cycle in the target information, the target parameter is a parameter in the target information; or
   in a case that the long cycle in the third configuration information is less than the cycle in the target information, the target parameter is a parameter in the target information; where
   the target information is the first configuration information, the second configuration information, or the fourth configuration information.

Optionally, in a case that the target information includes the short cycle, the cycle in the target information is the long cycle.

Optionally, in a case that the target configuration information includes the target information and the third configuration information, the determining module is specifically configured to:
determine, based on the target information, at least one of a second discontinuous transmission pattern and a second discontinuous transmission active time, and determine, based on the third configuration information, at least one of a third discontinuous transmission pattern and a third discontinuous transmission active time; and
perform a first operation, where the first operation includes at least one of the following:
   determining an intersection or a union of the second discontinuous transmission pattern and the third discontinuous transmission pattern as the first discontinuous transmission pattern of the target cell; or
   determining an intersection or a union of the second discontinuous transmission active time and the third discontinuous transmission active time as the first discontinuous transmission active time of the target cell.

Optionally, at least one of the second discontinuous transmission pattern and the second discontinuous transmission active time is determined based on a seventh parameter in the target information, and at least one of the third discontinuous transmission pattern and the third discontinuous transmission active time is determined based on an eighth parameter in the third configuration information corresponding to the seventh parameter.

Optionally, when the first discontinuous transmission active time is an intersection of the second discontinuous transmission active time and the third discontinuous transmission active time, the first discontinuous transmission active time includes at least one of the following:
a time during which the on-duration timer, inactivity timer, the uplink retransmission timer, downlink retransmission timer, or sidelink retransmission timer of the target information is running;
a time during which the discontinuous reception on-duration timer, discontinuous reception inactivity timer, uplink discontinuous reception retransmission timer, downlink discontinuous reception retransmission timer, or sidelink discontinuous reception retransmission timer of the third configuration information is running; or
an intersection of an active time determined based on a time during which the discontinuous reception on-duration timer, discontinuous reception inactivity timer, uplink discontinuous reception retransmission timer, downlink discontinuous reception retransmission timer, or sidelink discontinuous reception retransmission timer of the third configuration information is running and the active time determined based on the on-duration timer of the target information.

Optionally, the time during which the on-duration timer of the target information is running is greater than the time during which the discontinuous reception on-duration timer of the third configuration information is running, or an on-duration timer value configured by the target information is greater than a timer value of the discontinuous reception on-duration timer configured by the third configuration information.

Optionally, the first discontinuous transmission active time further includes at least one of the following:
a time during which a scheduling request prohibit timer, a random access response window, a random access contention resolution timer, or a message B response window is running; or
an intersection of a time during which a scheduling request prohibit timer, a random access response window, a random access contention resolution timer, or a message B response window is running and the active time determined based on the on-duration timer of the target information.

Optionally, the determining module 501 is specifically configured to perform at least one of the following:
in a case that a first cycle indicated by the target information is greater than or equal to a second cycle indicated by the third configuration information, determining that the cycle in the configuration information to be used by the target cell is the first cycle;
in a case that a second cycle indicated by the third configuration information is an integer multiple of a first cycle indicated by the target information, determining that the cycle in the configuration information to be used by the target cell is the second cycle; or
in a case that a second cycle indicated by the third configuration information is greater than a first cycle indicated by the target information and the second cycle is not an integer multiple of the first cycle, determining that the cycle in the configuration information to be used by the target cell is a target; where
the target information is the first configuration information, the second configuration information, or the fourth configuration information, and the target cycle satisfies any one of the following:
   the target cycle is the first cycle;
   the target cycle is an integer multiple of the first cycle, and an absolute value of a difference between the target cycle and the second cycle is minimized;
   the target cycle is an integer multiple of the first cycle and is a minimum cycle greater than the second cycle;
   the target cycle is an integer multiple of the first cycle and is a maximum cycle less than the second cycle; or
   the target cycle is N times the first cycle, where N is configured by the network-side device, and N is a positive integer.

Optionally, the first cycle and the second cycle satisfy at least one of the following:
when the first cycle is the cycle in the target information, the second cycle is the long cycle in the third configuration information;
when the first cycle is the long cycle in the target information, the second cycle is the long cycle in the third configuration information; or
when the first cycle is the short cycle in the target information, the second cycle is the short cycle in the third configuration information.

As shown in FIG. 6, an embodiment of the present application further provides a transmission processing apparatus. As shown in FIG. 6, the transmission processing apparatus 600 includes:
a sending module 601 configured to send target configuration information to a terminal, where the target configuration information is used to determine configuration information to be used by a target cell, and the target configuration information includes any one of the following: first configuration information; second configuration information; the first configuration information and third configuration information; the second configuration information and the third configuration information; fourth configuration information; and the fourth configuration information and the third configuration information; where
the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

Optionally, the first configuration information includes at least one of the following parameters: on-duration timer; start offset; slot offset; cycle; short cycle; or short cycle timer.

Optionally, the second configuration information includes at least one of the following parameters:
on-duration timer; start offset; slot offset; cycle; short cycle; short cycle timer; inactivity timer; downlink hybrid automatic repeat request round-trip time timer; uplink hybrid automatic repeat request round-trip time timer; sidelink hybrid automatic repeat request round-trip time timer; uplink retransmission timer; downlink retransmission timer; or sidelink retransmission timer.

Optionally, the target configuration information is used to determine at least one of a first discontinuous transmission pattern and a first discontinuous transmission active time of the target cell.

Optionally, the sending module 601 is further configured to: send a first activation indication to the terminal, where the first activation indication is used to indicate activation of the target configuration information or activation of cell discontinuous transmission.

Optionally, the first activation indication carries a configuration information identifier, and the target cell is a cell configured with target configuration information corresponding to the configuration information identifier.

Optionally, the sending module 601 is further configured to send first indication information to the terminal, where the first indication information is used to indicate that a first cell is to use the target configuration information; where the first cell is a cell that has not used the target configuration information.

Optionally, the first discontinuous transmission active time satisfies at least one of the following:
in a case that the target configuration information is the first configuration information, the first discontinuous transmission active time comprises a time during which the on-duration timer of the first configuration information is running;
in a case that the target configuration information is the second configuration information, the first discontinuous transmission active time comprises a time during which the on-duration timer, inactivity timer, the uplink retransmission timer, downlink retransmission timer, or sidelink retransmission timer of the second configuration information is running; or
in a case that the target configuration information is the fourth configuration information, the first discontinuous transmission active time comprises a time during which the on-duration timer, inactivity timer, the uplink retransmission timer, downlink retransmission timer, or sidelink retransmission timer of the fourth configuration information is running.

Optionally, in a case that the target configuration information includes the target information and the third configuration information, the sending module 601 is further configured to: send at least one of second indication information, third indication information, and fourth indication information to the terminal; where
the second indication information is used to indicate that a second cell is to use the target information, and the second cell is a cell that has not used the target information; the third indication information is used to indicate that a third cell is to use the target information, and the third cell is a cell using the third configuration information; and the fourth indication information is used to indicate that a fourth cell is to use the third configuration information, and the fourth cell is a cell using the target information.

The transmission processing apparatus in the embodiments of the present application may be an electronic device, such as an electronic device with an operating system, or a component in an electronic device, such as an integrated circuit or a chip. The electronic device may be a terminal or a device other than a terminal. For example, the terminal may include, but is not limited to, the types of terminal 11 listed above, and other devices may be servers, network attached storage (Network Attached Storage, NAS), or the like, which are not specifically limited in the embodiments of the present application.

The transmission processing apparatus provided in the embodiments of the present application can implement the processes of the method embodiments shown in FIG. 2 to FIG. 4, with the same technical effects achieved. To avoid repetition, details are not described again here.

Optionally, as shown in FIG. 7, an embodiment of the present application further provides a communication device 700, including a processor 701 and a memory 702, where the memory 702 stores a program or instructions executable on the processor 701, and the program or instructions, when executed by the processor 701, implement the steps of the transmission processing method embodiments described above, with the same technical effects achieved. To avoid repetition, details are not described again here.

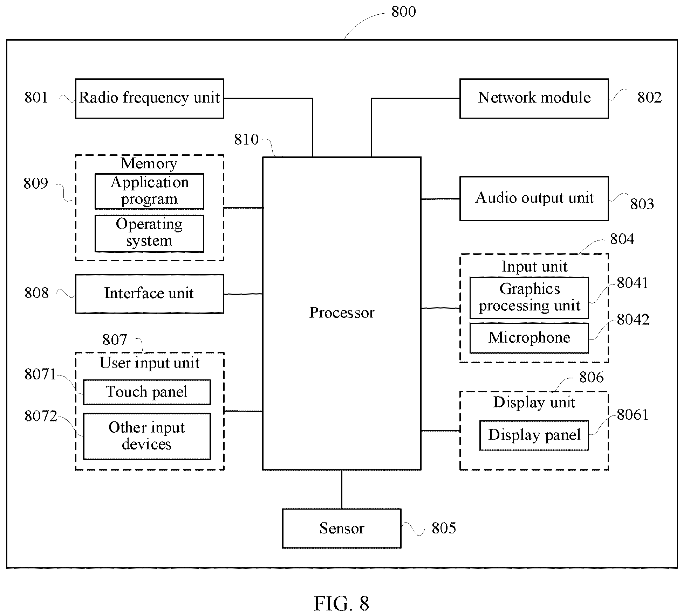

An embodiment of the present application further provides a terminal, including a processor and a communication interface, where the processor is configured to determine, based on target configuration information, configuration information to be used by a target cell, and determine, based on the configuration information to be used by the target cell, at least one of a first discontinuous transmission pattern and a first discontinuous transmission active time of the target cell. The target configuration information includes any one of the following: first configuration information; second configuration information; the first configuration information and third configuration information; the second configuration information and the third configuration information; fourth configuration information; and the fourth configuration information and the third configuration information; where the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information. This terminal embodiment corresponds to the terminal-side method embodiments described above, and all implementation processes and methodologies of the above method embodiments are applicable to this terminal embodiment, with the same technical effects achieved. Specifically, FIG. 8 is a schematic diagram of a hardware structure of a terminal implementing an embodiment of the present application.

The terminal 800 includes but is not limited to at least some of the following components: a radio frequency unit 801, a network module 802, an audio output unit 803, an input unit 804, a sensor 805, a display unit 806, a user input unit 807, an interface unit 808, a memory 809, and a processor 810.

Those skilled in the art can understand that the terminal 800 may also include a power supply (such as a battery) that supplies power to the components. The power supply may be logically connected to the processor 810 through a power management system, to implement functions such as charging, discharging, and power consumption management through the power management system. The terminal structure shown in FIG. 8 does not constitute a limitation on the terminal, and the terminal may include more or fewer components than shown, or combine some components, or have a different component arrangement, and details are not described here.

It should be understood that, in the embodiments of the present application, the input unit 804 may include a graphics processing unit (Graphics Processing Unit, GPU) 8041 and a microphone 8042, where the graphics processing unit 8041 processes image data of still pictures or videos obtained by an image capture device (such as a camera) in a video capture mode or an image capture mode. The display unit 806 may include a display panel 8061, which can be configured in the form of a liquid crystal display, an organic light-emitting diode, or the like. The user input unit 807 includes at least one of a touch panel 8071 and other input devices 8072. The touch panel 8071, also referred to as a touchscreen, may include a touch detection device and a touch controller. Other input devices 8072 may include but are not limited to a physical keyboard, function keys (such as volume control keys, and power switch keys), a trackball, a mouse, and a joystick, and details are not described here.

In the embodiments of the present application, after receiving downlink data from a network-side device, the radio frequency unit 801 can transmit it to the processor 810 for processing. In addition, the radio frequency unit 801 can transmit uplink data to the network-side device. Typically, the radio frequency unit 801 includes but is not limited to an antenna, an amplifier, a transceiver, a coupler, a low-noise amplifier, and a duplexer.

The memory 809 can be used to store software programs or instructions and various data. The memory 809 may mainly include a first storage area for storing programs or instructions and a second storage area for storing data, where the first storage area may store an operating system, application programs, or instructions required for at least one function (such as a sound playback function, and an image playback function), and the like. In addition, the memory 809 may include volatile memory or non-volatile memory. Non-volatile memory may include read-only memory (Read-Only Memory, ROM), programmable ROM (Programmable ROM, PROM), erasable PROM (Erasable PROM, EPROM), electrically erasable PROM (Electrically EPROM, EEPROM), or flash memory. Volatile memory may include random access memory (Random access Memory, RAM), static RAM (Static RAM, SRAM), dynamic RAM (Dynamic RAM, DRAM), synchronous DRAM (Synchronous DRAM, SDRAM), double data rate SDRAM (Double Data Rate SDRAM, DDRSDRAM), enhanced SDRAM (Enhanced SDRAM, ESDRAM), synch link DRAM (Synch link DRAM, SLDRAM), and direct Rambus RAM (Direct Rambus RAM, DRRAM). The memory 809 in the embodiments of the present application includes but is not limited to these and any other suitable types of memory.

The processor 810 may include one or more processing units; optionally, the processor 810 integrates an application processor and a modem processor, where the application processor mainly handles operations related to the operating system, user interface, application programs, and the like, and the modem processor mainly handles wireless communication signals, such as a baseband processor. It can be understood that the modem processor may not be integrated into the processor 810.

The processor 810 is configured to determine, based on target configuration information, configuration information to be used by a target cell, and determine, based on the configuration information to be used by the target cell, at least one of a first discontinuous transmission pattern and a first discontinuous transmission active time of the target cell; where the target configuration information includes any one of the following: first configuration information; second configuration information; the first configuration information and third configuration information; the second configuration information and the third configuration information; fourth configuration information; and the fourth configuration information and the third configuration information; where
the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

An embodiment of the present application further provides a network-side device, including a processor and a communication interface, where the communication interface is configured to send target configuration information to a terminal. The target configuration information is used to determine configuration information to be used by a target cell, and the target configuration information includes any one of the following: first configuration information; second configuration information; the first configuration information and third configuration information; the second configuration information and the third configuration information; fourth configuration information; and the fourth configuration information and the third configuration information; where the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information. This network-side device embodiment corresponds to the network-side device method embodiments described above, and all implementation processes and methodologies of the above method embodiments are applicable to this network-side device embodiment, with the same technical effects achieved.

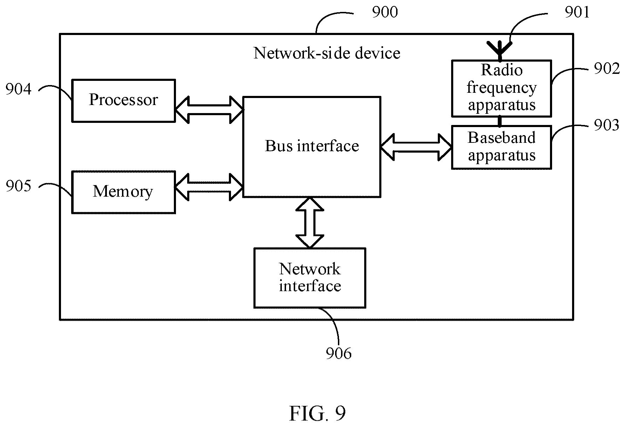

Specifically, an embodiment of the present application further provides a network-side device. As shown in FIG. 9, the network-side device 900 includes: an antenna 901, a radio frequency apparatus 902, a baseband apparatus 903, a processor 904, and a memory 905. The antenna 901 is connected to the radio frequency apparatus 902. In the uplink direction, the radio frequency apparatus 902 receives information through the antenna 901 and transmits the received information to the baseband apparatus 903 for processing. In the downlink direction, the baseband apparatus 903 processes information to be transmitted and transmits it to the radio frequency apparatus 902, which processes the received information and transmits it out through the antenna 901.

The method executed by the network-side device in the above embodiments can be implemented in the baseband apparatus 903, which includes a baseband processor.

The baseband apparatus 903 may, for example, include at least one baseband board, on which multiple chips are disposed, as shown in FIG. 9, where one chip, for example, is a baseband processor that connects to the memory 905 through a bus interface to call programs in the memory 905 to perform the network device operations shown in the above method embodiments.

The network-side device may also include a network interface 906, which is, for example, a common public radio interface (Common Public Radio Interface, CPRI).

Specifically, the network-side device 900 of the embodiment of the present application further includes an instruction or a program stored in the memory 905 and executable on the processor 904, where the processor 904 calls the instruction or program in the memory 905 to execute the methods performed by the modules shown in FIG. 6, with the same technical effects achieved. To avoid repetition, details are not described again here.

An embodiment of the present application further provides a readable storage medium, where the readable storage medium stores a program or an instruction, and when the program or instruction is executed by a processor, the processes of the transmission processing method embodiments described above are implemented, with the same technical effects achieved. To avoid repetition, details are not described again here.

The processor is the processor in the terminal described in the above embodiments. The readable storage medium includes a computer-readable storage medium, such as a computer read-only memory (ROM), random access memory (RAM), magnetic disk, or optical disk. In some examples, the readable storage medium may be a non-transitory readable storage medium.

An embodiment of the present application further provides a chip, where the chip includes a processor and a communication interface, the communication interface is coupled to the processor, and the processor is configured to run a program or an instruction to implement the processes of the transmission processing method embodiments described above, with the same technical effects achieved. To avoid repetition, details are not described again here.

It should be understood that the chip mentioned in the embodiments of the present application may also be referred to as a system-on-chip, system chip, chip system, or system-on-chip chip.

An embodiment of the present application further provides a computer program/program product, where the computer program/program product is stored in a storage medium, and the computer program/program product is executed by at least one processor to implement the processes of the transmission processing method embodiments described above, with the same technical effects achieved. To avoid repetition, details are not described again here.

An embodiment of the present application further provides a communication system, including a terminal and a network-side device, where the terminal is configured to execute the processes of the transmission processing method as shown in FIG. 2 and the various method embodiments on the terminal side described above, and the network-side device is configured to execute the processes of the transmission processing method as shown in FIG. 4 and the various method embodiments on the network-side device described above, with the same technical effects achieved. To avoid repetition, details are not described again here.

It should be noted that in this document, the terms "comprising," "including," or any other variation thereof are intended to cover a non-exclusive inclusion, such that a process, method, article, or apparatus that includes a list of elements does not include only those elements but may include other elements not expressly listed or inherent to such process, method, article, or apparatus. Without further limitation, an element defined by the phrase "including a..." does not exclude the presence of other identical elements in the process, method, article, or apparatus that includes the element. In addition, it should be noted that the scope of the methods and apparatuses in the embodiments of the present application is not limited to performing functions in the order shown or discussed, but may also include performing functions in a substantially simultaneous manner or in a reverse order based on the functions involved. For example, the described methods may be performed in an order different from that described, and various steps may be added, omitted, or combined. Furthermore, features described with reference to certain examples may be combined in other examples.

Through the description of the above embodiments, those skilled in the art can clearly understand that the above method embodiments can be implemented by means of a computer software product plus a necessary general hardware platform, and of course, can also be implemented by hardware. The computer software product is stored in a storage medium (such as ROM, RAM, magnetic disk, and optical disk) and includes several instructions to enable a terminal or network-side device to execute the methods described in the various embodiments of the present application.

The embodiments of the present application have been described above in conjunction with the drawings, but the present application is not limited to the specific embodiments described above. The specific embodiments described above are merely illustrative and not restrictive. Those of ordinary skill in the art, under the inspiration of the present application, can make many forms of implementations without departing from the spirit of the present application and the scope protected by the claims, and these implementations all fall within the protection of the present application.

## Claims

1. A transmission processing method comprising:
determining, by a terminal based on target configuration information, configuration information to be used by a target cell, wherein the target configuration information comprises any one of the following: first configuration information; second configuration information; the first configuration information and third configuration information; the second configuration information and the third configuration information; fourth configuration information; and the fourth configuration information and the third configuration information; and
determining, by the terminal based on the configuration information to be used by the target cell, at least one of a first discontinuous transmission pattern and a first discontinuous transmission active time of the target cell; wherein
the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

2. The method according to claim 1, wherein the first configuration information comprises at least one of the following parameters: on-duration timer; start offset; slot offset; cycle; short cycle; or short cycle timer.

3. The method according to claim 1 or 2, wherein the second configuration information comprises at least one of the following parameters:
on-duration timer; start offset; slot offset; cycle; short cycle; short cycle timer; inactivity timer; downlink hybrid automatic repeat request round-trip time timer; uplink hybrid automatic repeat request round-trip time timer; sidelink hybrid automatic repeat request round-trip time timer; uplink retransmission timer; downlink retransmission timer; or sidelink retransmission timer.

4. The method according to any one of claims 1 to 3, wherein in a case that the target configuration information is the first configuration information or the second configuration information, and the determining, by the terminal based on the target configuration information, at least one of a first discontinuous transmission pattern and a first discontinuous transmission active time of the target cell comprises:
determining, by the terminal based on the configuration information to be used by the target cell, at least one of the first discontinuous transmission pattern and the first discontinuous transmission active time of the target cell in a case that the terminal receives a first activation indication sent by a network-side device;
wherein the first activation indication is used to indicate activation of the target configuration information or activation of cell discontinuous transmission.

5. The method according to claim 4, wherein the first activation indication carries a configuration information identifier, and the target cell is a cell configured with target configuration information corresponding to the configuration information identifier.

6. The method according to any one of claims 1 to 5, wherein in a case that the target configuration information is the first configuration information or the second configuration information, after the determining, by the terminal based on the configuration information to be used by the target cell, at least one of a first discontinuous transmission pattern and a first discontinuous transmission active time of the target cell, the method further comprises:
receiving, by the terminal from the network-side device, first indication information, wherein the first indication information is used to indicate that a first cell is to use the target configuration information; and
determining, by the terminal, that the first cell is to use the target configuration information; wherein
the first cell is a cell that has not used the target configuration information.

7. The method according to any one of claims 1 to 6, wherein in a case that the target configuration information is the first configuration information, the method further comprises at least one of the following:
not expecting, by the terminal, the network-side device to configure the second configuration information;
not expecting, by the terminal, the network-side device to configure the third configuration information;
releasing, by the terminal, the second configuration information; or
releasing, by the terminal, the third configuration information.

8. The method according to any one of claims 1 to 6, wherein in a case that the target configuration information is the second configuration information, the method further comprises at least one of the following:
not expecting, by the terminal, the network-side device to configure the third configuration information; or
releasing, by the terminal, the third configuration information.

9. The method according to any one of claims 1 to 8, wherein the first discontinuous transmission active time satisfies at least one of the following:
in a case that the target configuration information is the first configuration information, the first discontinuous transmission active time comprises a time during which the on-duration timer of the first configuration information is running;
in a case that the target configuration information is the second configuration information, the first discontinuous transmission active time comprises a time during which the on-duration timer, inactivity timer, the uplink retransmission timer, downlink retransmission timer, or sidelink retransmission timer of the second configuration information is running; or
in a case that the target configuration information is the fourth configuration information, the first discontinuous transmission active time comprises a time during which the on-duration timer, inactivity timer, the uplink retransmission timer, downlink retransmission timer, or sidelink retransmission timer of the fourth configuration information is running.

10. The method according to any one of claims 1 to 3, wherein in a case that the target configuration information comprises the target information and the third configuration information, the method further comprises at least one of the following:
determining, by the terminal, that a second cell is to use the target information in a case that second indication information sent by a network-side device is received, wherein the second cell is a cell that has not used the target information;
determining, by the terminal, that a third cell is to use the target information in a case that third indication information sent by a network-side device is received, wherein the third cell is a cell using the third configuration information; or
determining, by the terminal, that a fourth cell is to use the third configuration information in a case that fourth indication information sent by a network-side device is received, wherein the fourth cell is a cell using the target information; wherein
the target information is the first configuration information, the second configuration information, or the fourth configuration information.

11. The method according to claim 1 or 10, wherein the long cycle in the third configuration information is a positive integer multiple of the cycle in the target information.

12. The method according to claim 1 or 10, wherein in a case that the target configuration information comprises the target information and the third configuration information, the determining, by the terminal based on the configuration information to be used by the target cell, at least one of a first discontinuous transmission pattern and a first discontinuous transmission active time of the target cell comprises:
determining, by the terminal based on a target parameter in the configuration information to be used by the target cell, at least one of the first discontinuous transmission pattern and the first discontinuous transmission active time of the target cell; wherein
the target parameter satisfies at least one of the following:
in a case that the target information does not comprise a first parameter, the target parameter comprises a second parameter in the third configuration information corresponding to the first parameter;
in a case that the target information comprises a third parameter and that the third configuration information comprises a fourth parameter corresponding to the third parameter, the target parameter comprises the third parameter and does not comprise the fourth paramet
in a case that the target information comprises a fifth parameter and that the third configuration information comprises a sixth parameter corresponding to the fifth parameter, the target parameter comprises the sixth parameter and does not comprise the fifth parameter;
in a case that the long cycle in the third configuration information is not a positive integer multiple of the cycle in the target information, the target parameter is a parameter in the third configuration information;
in a case that the long cycle in the third configuration information is a positive integer multiple of the cycle in the target information, the target parameter is a parameter in the target information; or
in a case that the long cycle in the third configuration information is less than the cycle in the target information, the target parameter is a parameter in the target information; wherein
the target information is the first configuration information, the second configuration information, or the fourth configuration information.

13. The method according to claim 12, wherein in a case that the target information comprises the short cycle, the cycle in the target information is the long cycle.

14. The method according to claim 1 or 10, wherein in a case that the target configuration information comprises the target information and the third configuration information, the determining, by the terminal based on the configuration information to be used by the target cell, at least one of a first discontinuous transmission pattern and a first discontinuous transmission active time of the target cell comprises:
determining, by the terminal based on the target information, at least one of a second discontinuous transmission pattern and a second discontinuous transmission active time, and determining, based on the third configuration information, at least one of a third discontinuous transmission pattern and a third discontinuous transmission active time; and
performing, by the terminal, a first operation, wherein the first operation comprises at least one of the following:
determining an intersection or a union of the second discontinuous transmission pattern and the third discontinuous transmission pattern as the first discontinuous transmission pattern of the target cell; or
determining an intersection or a union of the second discontinuous transmission active time and the third discontinuous transmission active time as the first discontinuous transmission active time of the target cell.

15. The method according to claim 14, wherein at least one of the second discontinuous transmission pattern and the second discontinuous transmission active time is determined based on a seventh parameter in the target information, and at least one of the third discontinuous transmission pattern and the third discontinuous transmission active time is determined based on an eighth parameter in the third configuration information corresponding to the seventh parameter.

16. The method according to claim 14, wherein in a case that the first discontinuous transmission active time is an intersection of the second discontinuous transmission active time and the third discontinuous transmission active time, the first discontinuous transmission active time comprises at least one of the following:
a time during which the on-duration timer, inactivity timer, the uplink retransmission timer, downlink retransmission timer, or sidelink retransmission timer of the target information is running;
a time during which the discontinuous reception on-duration timer, discontinuous reception inactivity timer, uplink discontinuous reception retransmission timer, downlink discontinuous reception retransmission timer, or sidelink discontinuous reception retransmission timer of the third configuration information is running; or
an intersection of an active time determined based on a time during which the discontinuous reception on-duration timer, discontinuous reception inactivity timer, uplink discontinuous reception retransmission timer, downlink discontinuous reception retransmission timer, or sidelink discontinuous reception retransmission timer of the third configuration information is running and the active time determined based on the on-duration timer of the target information.

17. The method according to claim 16, wherein the time during which the on-duration timer of the target information is running is greater than the time during which the discontinuous reception on-duration timer of the third configuration information is running, or an on-duration timer value configured by the target information is greater than a timer value of the discontinuous reception on-duration timer configured by the third configuration information.

18. The method according to claim 16, wherein the first discontinuous transmission active time further comprises at least one of the following:
a time during which a scheduling request prohibit timer, a random access response window, a random access contention resolution timer, or a message B response window is running; or
an intersection of a time during which a scheduling request prohibit timer, a random access response window, a random access contention resolution timer, or a message B response window is running and the active time determined based on the on-duration timer of the target information.

19. The method according to any one of claims 1 to 18, wherein the determining, by a terminal based on the target configuration information, configuration information to be used by a target cell comprises at least one of the following:
in a case that a first cycle indicated by the target information is greater than or equal to a second cycle indicated by the third configuration information, determining, by the terminal, that the cycle in the configuration information to be used by the target cell is the first cycle;
in a case that a second cycle indicated by the third configuration information is an integer multiple of a first cycle indicated by the target information, determining, by the terminal, that the cycle in the configuration information to be used by the target cell is the second cycle; or
in a case that a second cycle indicated by the third configuration information is greater than a first cycle indicated by the target information and the second cycle is not an integer multiple of the first cycle, determining, by the terminal, that the cycle in the configuration information to be used by the target cell is a target cycle; wherein
the target information is the first configuration information, the second configuration information, or the fourth configuration information, and the target cycle satisfies any one of the following:
the target cycle is the first cycle;
the target cycle is an integer multiple of the first cycle, and an absolute value of a difference between the target cycle and the second cycle is minimized;
the target cycle is an integer multiple of the first cycle and is a minimum cycle greater than the second cycle;
the target cycle is an integer multiple of the first cycle and is a maximum cycle less than the second cycle; or
the target cycle is N times the first cycle, wherein N is configured by the network-side device, and N is a positive integer.

20. The method according to claim 19, wherein the first cycle and the second cycle satisfy at least one of the following:
when the first cycle is the cycle in the target information, the second cycle is the long cycle in the third configuration information;
when the first cycle is the long cycle in the target information, the second cycle is the long cycle in the third configuration information; or
when the first cycle is the short cycle in the target information, the second cycle is the short cycle in the third configuration information.

21. A transmission processing method comprising:
transmitting, by a network-side device to a terminal, target configuration information, wherein the target configuration information is used to determine configuration information to be used by a target cell, and the target configuration information comprises any one of the following: first configuration information; second configuration information; the first configuration information and third configuration information; the second configuration information and the third configuration information; fourth configuration information; and the fourth configuration information and the third configuration information; wherein
the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

22. The method according to claim 21, wherein the first configuration information comprises at least one of the following parameters: on-duration timer; start offset; slot offset; cycle; short cycle; or short cycle timer.

23. The method according to claim 21 or 22, wherein the second configuration information comprises at least one of the following parameters: on-duration timer; start offset; slot offset; cycle; short cycle; short cycle timer; inactivity timer; downlink hybrid automatic repeat request round-trip time timer; uplink hybrid automatic repeat request round-trip time timer; sidelink hybrid automatic repeat request round-trip time timer; uplink retransmission timer; downlink retransmission timer; or sidelink retransmission timer.

24. The method according to any one of claims 21 to 23, wherein the method further comprises:
sending, by the network-side device to the terminal, a first activation indication, wherein the first activation indication is used to indicate activation of the target configuration information or activation of cell discontinuous transmission.

25. The method according to claim 24, wherein the first activation indication carries a configuration information identifier, and the target cell is a cell configured with target configuration information corresponding to the configuration information identifier.

26. The method according to claim 24, wherein the method further comprises:
sending, by the network-side device to the terminal, first indication information, the first indication information being used to indicate that a first cell is to use the target configuration information; wherein the first cell is a cell that has not used the target configuration information.

27. The method according to claim 24, wherein the first discontinuous transmission active time satisfies at least one of the following:
in a case that the target configuration information is the first configuration information, the first discontinuous transmission active time comprises a time during which the on-duration timer of the first configuration information is running;
in a case that the target configuration information is the second configuration information, the first discontinuous transmission active time comprises a time during which the on-duration timer, inactivity timer, the uplink retransmission timer, downlink retransmission timer, or sidelink retransmission timer of the second configuration information is running; or
in a case that the target configuration information is the fourth configuration information, the first discontinuous transmission active time comprises a time during which the on-duration timer, inactivity timer, the uplink retransmission timer, downlink retransmission timer, or sidelink retransmission timer of the fourth configuration information is running.

28. The method according to any one of claims 21 to 23, wherein in a case that the target configuration information comprises the target information and the third configuration information, the method further comprises:
sending, by the network-side device to the terminal, at least one of second indication information, third indication information, and fourth indication information; wherein
the second indication information is used to indicate that a second cell is to use the target information, and the second cell is a cell that has not used the target information; the third indication information is used to indicate that a third cell is to use the target information, and the third cell is a cell using the third configuration information; and the fourth indication information is used to indicate that a fourth cell is to use the third configuration information, and the fourth cell is a cell using the target information.

29. A transmission processing apparatus comprising:
a determining module configured to determine, based on target configuration information, configuration information to be used by a target cell, and determine, based on the configuration information to be used by the target cell, at least one of a first discontinuous transmission pattern and a first discontinuous transmission active time of the target cell; wherein the target configuration information comprises any one of the following: first configuration information; second configuration information; the first configuration information and third configuration information; the second configuration information and the third configuration information; fourth configuration information; and the fourth configuration information and the third configuration information; wherein
the at least one of the first discontinuous transmission pattern and the first discontinuous transmission active time is used for the terminal to perform transmission; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

30. A transmission processing apparatus comprising:
a sending module configured to send target configuration information to a terminal, wherein the target configuration information is used to determine configuration information to be used by a target cell, and the target configuration information comprises any one of the following: first configuration information; second configuration information; the first configuration information and third configuration information; the second configuration information and the third configuration information; fourth configuration information; and the fourth configuration information and the third configuration information; wherein
the configuration information to be used by the target cell is used to determine at least one of a first discontinuous transmission pattern and a first discontinuous transmission active time of the target cell; the fourth configuration information is determined based on the first configuration information and the second configuration information; the first configuration information is configuration information of a cell discontinuous transmission pattern; the second configuration information is discontinuous transmission configuration information used by the terminal when cell discontinuous transmission is active; and the third configuration information is terminal discontinuous reception configuration information.

31. A terminal comprising a processor and a memory, wherein the memory stores a program or an instruction executable on the processor, and when the program or instruction is executed by the processor, the steps of the transmission processing method according to any one of claims 1 to 20 are implemented.

32. A network-side device comprising a processor and a memory, wherein the memory stores a program or an instruction executable on the processor, and when the program or instruction is executed by the processor, the steps of the transmission processing method according to any one of claims 21 to 28 are implemented.

33. A readable storage medium, wherein the readable storage medium has stored a program or an instruction thereon, and when the program or instruction is executed by a processor, the steps of the transmission processing methods according to any one of claims 1 to 28 are implemented.
